(19) **Europäisches Patentamt European Patent Office Office européen des brevets**

(11) **EP 4 501 633 A1**

(12) **EUROPEAN PATENT APPLICATION**
published in accordance with Art. 153(4) EPC

(43) Date of publication:
05.02.2025 Bulletin 2025/06

(21) Application number: 22935727.2

(22) Date of filing: 19.12.2022

(51) International Patent Classification (IPC):
*B32B 27/32* (2006.01) *B65D 65/40* (2006.01)
*C08J 5/18* (2006.01)

(52) Cooperative Patent Classification (CPC):
B32B 27/32; B65D 65/40; C08J 5/18

(86) International application number:
PCT/JP2022/046643

(87) International publication number:
WO 2023/188599 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.03.2022 JP 2022055761

(71) Applicant: Toray Industries, Inc.
Tokyo 103-8666 (JP)

(72) Inventors:
• IMANISHI, Yasuyuki
Otsu-shi, Shiga 520-8558 (JP)
• OHKURA, Masatoshi
Otsu-shi, Shiga 520-8558 (JP)
• AONO, Haruki
Otsu-shi, Shiga 520-8558 (JP)

(74) Representative: Mewburn Ellis LLP
Aurora Building
Counterslip
Bristol BS1 6BX (GB)

(54) **POLYOLEFIN-BASED FILM, LAMINATED BODY, PACKING MATERIAL, AND PACKED BODY**

(57) An object of the present invention to provide a polyolefin-based film that is excellent in structural stability against heat during vapor deposition and has favorable water vapor barrier properties and oxygen barrier properties against heat during heat sterilization treatment, particularly when used for packing applications. A polyolefin-based film includes at least one layer (layer A) containing a cycloolefin-based resin and a polypropylene-based resin, in which when a storage modulus in a main orientation axis direction at 50°C and 121°C, obtained at a frequency of 10 Hz in a dynamic viscoelasticity measurement, is E'50 (Pa) and E'121 (Pa), respectively, E'121/E'50 is more than 0.25 and is 0.99 or less, a thermal shrinkage rate in the main orientation axis direction is -2% or more and 10% or less at 150°C, and a tensile elongation in a direction orthogonal to a main orientation axis is 20% or more and 300% or less.

EP 4 501 633 A1

**Description**

TECHNICAL FIELD

The present invention particularly relates to a polyolefin-based film, a laminated body, a packing material, and a packed body suitably used in packing applications.

BACKGROUND ART

Since polypropylene films are excellent in transparency, mechanical properties, electrical properties, and the like, polypropylene films have been used in various applications such as packing applications, tape applications, and electrical insulation applications including cable wrapping and capacitors. Among them, in the packing applications, laminated films in which a thin film of aluminum (hereinafter, it may be referred to as "Al".) is vapor-deposited on a polypropylene film are widely used. The films obtained by Al vapor deposition are, however, opaque, and thus, not suitable for applications that require visibility of contents. In addition, in recent years, there has been a growing trend toward recycling packing plastics, and the films including the Al vapor-deposited layer also have the problem of insufficient recyclability.

From the above circumstances, there is a trend to replace the conventional Al vapor-deposited layer with a transparent vapor-deposited layer of aluminum oxide (hereinafter, it may be referred to as AlOx.), silicon oxide, or the like. When such a transparent vapor-deposited layer is used, the transparency and recyclability of packing materials can be improved. However, since the transparent vapor-deposited layer is typically thinner and brittler than the Al vapor-deposited layer, there is a problem in that defects such as pinholes and cracks are generated in the vapor-deposited layer during formation of the vapor-deposited layer or in a post-process such as bag-forming processing, and the water vapor barrier property and the oxygen barrier property are easily deteriorated. In addition, in a case where the polypropylene film is applied to food packing applications, heat sterilization treatment (boil, semi-retort, retort, etc.) may be performed. Since the polypropylene film typically has poorer thermal dimensional stability than a polyester film or the like, there is also a problem in that the film is deformed by heat during heat sterilization treatment, and defects such as pinholes and cracks in the vapor-deposited layer are generated, resulting in a deterioration of the water vapor barrier property and the oxygen barrier property.

As films having improved thermal dimensional stability of a polypropylene film, there have been proposed a film that has improved heat resistance and can exhibit withstand voltage properties even at a high temperature and is suitable for a capacitor, through the use of a film which is obtained by blending a cycloolefin-based resin having a glass transition temperature of 120°C to 170°C inclusive and polypropylene, or a laminated film in which a polypropylene layer is provided on both sides of a cycloolefin-based resin layer (Patent Documents 1 and 2). Similarly, films suitable for packing applications have been proposed, which have high barrier properties, strength suitable for processing, and transparency, by providing a polypropylene layer on both sides of a resin layer in which a cycloolefin-based resin and polypropylene are blended (Patent Documents 3 and 4).

PRIOR ART DOCUMENT

PATENT DOCUMENTS

Patent Document 1: Japanese Translation of PCT International Application Publication No. 2020-521867
Patent Document 2: Japanese Patent Laid-open Publication No. 2018-34510
Patent Document 3: Japanese Patent Laid-open Publication No. H09-272188
Patent Document 4: Japanese Translation of PCT International Application Publication No. 2005-535481

SUMMARY OF THE INVENTION

PROBLEMS TO BE SOLVED BY THE INVENTION

However, the polypropylene film described in Patent Document 1 has improved heat resistance by blending a cycloolefin-based resin and a polypropylene resin, but the area stretch ratio during film formation is small, and the molecular chain extension of the polypropylene resin is insufficient, and there is room for improvement in thermal stability. In addition, the film of Patent Document 2 has an inner layer of cycloolefin alone, and therefore, as in the case of the polypropylene film described in Patent Document 1, the area stretch ratio during film formation is small, and the molecular chain extension of the polypropylene resin is insufficient, and there is room for improvement in thermal stability.

The film of Patent Document 3 suitable for packing applications is obtained by blending a cycloolefin-based resin and a polypropylene resin and biaxially stretching the blend, but the dispersion of the cycloolefin-based resin in the film and the heat setting after stretching are insufficient, and therefore, there is a problem that the thermal dimensional stability is poor. The film of Patent Document 4 is a blend film of a cycloolefin-based resin and a polypropylene resin, but has no idea of stretching and has insufficient thermal stability. Therefore, the films of Patent Documents 3 and 4 have a problem that defects such as pinholes and cracks are likely to occur in the vapor-deposited layer due to deformation of the film by heat during the heat sterilization treatment, and the water vapor barrier property and the oxygen barrier property are deteriorated.

Therefore, an object of the present invention is to provide a polyolefin-based film capable of reducing deterioration in structural stability, water vapor barrier properties, and oxygen barrier properties due to heating.

SOLUTIONS TO THE PROBLEMS

The present inventors have conducted intensive studies in order to solve the above problems and have invented a first polyolefin-based film of the present invention and a second polyolefin-based film of the present invention below. The first polyolefin-based film of the present invention is a polyolefin-based film including at least one layer (layer A) containing a cycloolefin-based resin and a polypropylene-based resin, wherein when a storage modulus in a main orientation axis direction at 50°C and 121°C, obtained at a frequency of 10 Hz in a dynamic viscoelasticity measurement, is E'50 (Pa) and E'121 (Pa), respectively, E'121/E'50 is more than 0.25 and is 0.99 or less, a thermal shrinkage rate in the main orientation axis direction is -2% or more and 10% or less at 150°C, and a tensile elongation in a direction orthogonal to a main orientation axis is 20% or more and 300% or less.

The second polyolefin-based film of the present invention is a polyolefin-based film including at least one layer (layer A) containing a cycloolefin-based resin and a polypropylene-based resin, wherein, assuming a section obtained by cutting the layer A along a plane parallel to the main orientation axis direction and a thickness direction is a section X, in a rectangle measuring 1 um × 2 $\mu$m defined in the section X such that a pair of short sides are parallel to the thickness direction, there are two or more domains of the cycloolefin-based resin passing through the pair of short sides, and E'121/E'50 is greater than 0.20 and is 0.99 or less when the storage modulus in the main orientation axis direction at 50°C and 121°C, obtained at a frequency of 10 Hz in a dynamic viscoelasticity measurement, is E'50 (Pa) and E'121 (Pa), respectively.

EFFECTS OF THE INVENTION

According to the present invention, a polyolefin-based film capable of reducing deterioration in structural stability, water vapor barrier properties, and oxygen barrier properties due to heating can be obtained.

BRIEF DESCRIPTION OF THE DRAWINGS

Fig. 1 schematically shows a rectangle measuring 1 um × 2 um defined in the section X of the polyolefin-based film according to one embodiment of the present invention such that a pair of sides are parallel to the thickness direction, and shows domains of the cycloolefin-based resin passing through the pair of sides parallel to the thickness direction of the rectangle.

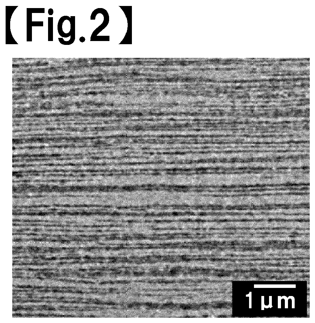

Fig. 2 is an enlarged photograph (magnification: 2,000 times) of the section X of the polyolefin-based film according to one embodiment (embodiments of Example 1 and Example 2) of the present invention.

EMBODIMENTS OF THE INVENTION

Hereinafter, the first and second polyolefin-based films of the present invention will be described in detail. Hereinafter, when the upper limits and the lower limits of preferable ranges are described separately, the limits can be arbitrarily combined. The first and second polyolefin-based films of the present invention may be collectively referred to as the present invention or the polyolefin-based film of the present invention.

In the present specification, hereinafter, the polyolefin-based film may be simply referred to as a film. In addition, in the polyolefin-based film of the present invention, the "thickness direction" refers to a direction perpendicular to the film surface. The "machine direction" is a direction (hereinafter sometimes referred to as "MD") corresponding to the flow direction in a film production step, and the "transverse direction" is a direction (hereinafter sometimes referred to as "TD") orthogonal to the flow direction in the film production process in the film surface. When the film sample has a shape such as a reel and a roll, it can be said that a film winding direction is the machine direction.

Since the polyolefin-based film of the present invention is not a microporous film, it does not have a large number of pores. That is, the polyolefin-based film of the present invention means a polyolefin-based film other than the microporous film. Here, the microporous film is defined as a film having a pore structure that penetrates both surfaces of the film and has air permeability of 5,000 seconds/100 ml or less at a permeation time of 100 ml of air at 23°C and a relative humidity of 65% using a B-type Gurley tester of JIS P 8117 (1998).

Further, the polyolefin-based film refers to an article formed into a sheet shape containing more than 50% by mass and 100% by mass or less of a polyolefin-based resin when all the components constituting the film are taken as 100% by mass. When a plurality of types of polyolefin-based resins are contained, the content of the polyolefin-based resin is calculated by adding all the polyolefin-based resins.

The polyolefin-based resins refer to resins containing olefin units in an amount of more than 50 mol% and 100 mol% or less, where 100 mol% is the total amount of the component units constituting the resins. When a plurality of kinds of component units corresponding to the olefin units are contained, all the olefin units are summed up to obtain the olefin unit amount.

The polypropylene-based resins refer to resins which do not fall under the category of cycloolefin-based resins among resins containing propylene units in an amount of more than 50 mol% and 100 mol% or less, where 100 mol% is the total amount of the component units constituting the resins.

The cycloolefin-based resins refer to resins containing cycloolefin units in an amount of more than 10 mol% and 100 mol% or less, where 100 mol% is the total amount of the component units constituting the resins. When a plurality of kinds of component units corresponding to the cycloolefin units are contained, all the cycloolefin units are summed up to obtain the cycloolefin unit amount.

In the first polyolefin-based film of the present invention, it is important that E'121/E'50 is more than 0.25 and 0.99 or less when a storage modulus in a main orientation axis direction at 50°C and 121°C, obtained at a frequency of 10 Hz in a dynamic viscoelasticity measurement, is E'50 (Pa) and E'121 (Pa), respectively, from the viewpoint of having heat stability. The method for measuring the storage modulus in the main orientation axis direction will be described later.

The fact that E'121/E'50 of the polyolefin-based film is more than 0.25 means that the temperature dependency of the storage modulus is small, in other words, the amorphous molecular chain in the film is less likely to move under a high-temperature environment. By setting E'121/E'50 of the polyolefin-based film to be more than 0.25, for example, when a layer containing a metal and an inorganic compound in a total amount of more than 50% by mass and 100% by mass or less (hereinafter, referred to as layer D) is vapor-deposited on at least one surface of the film to be described later, defects such as pinholes and cracks generated in the layer D due to deformation of the film by heat during vapor deposition can be suppressed, and the water vapor barrier property and the oxygen barrier property of the laminated body having the layer D vapor-deposited thereon can be improved. In addition, since deformation of the film due to a high temperature treatment such as a heat sterilization treatment performed after bag-forming processing is suppressed, deterioration of water vapor barrier properties and oxygen barrier properties associated with such a treatment can also be reduced. On the other hand, when E'121/E'50 of the film is more than 0.99, productivity may be deteriorated due to breakage of the film during film formation or the like. This is because it is necessary to use a raw material having excessively high crystallinity or to perform biaxial stretching at a high area magnification during film formation.

From the above viewpoint, E'121/E'50 of the film is preferably 0.28 or more, more preferably 0.31 or more, still more preferably 0.33 or more, and particularly preferably 0.35 or more. On the other hand, the upper limit of E'121/E'50 is preferably 0.89, more preferably 0.69.

In the second polyolefin-based film of the present invention, it is important that E'121/E'50 is more than 0.20 and 0.99 or less when the storage modulus in the main orientation axis direction at 50°C and 121°C, obtained at a frequency of 10 Hz in a dynamic viscoelasticity measurement, is E'50 (Pa) and E'121 (Pa), respectively, from the viewpoint of having heat stability. E'121/E'50 of the film is preferably more than 0.25, more preferably 0.28 or more, more preferably 0.31 or more, still more preferably 0.33 or more, and particularly preferably 0.35 or more. On the other hand, the upper limit of E'121/E'50 is preferably 0.89, more preferably 0.69.

In order to control E'121/E'50 of the first polyolefin-based film of the present invention to be more than 0.25 and 0.99 or less and control E'121/E'50 of the second polyolefin-based film of the present invention to be more than 0.20 and 0.99 or less, for example, a method of controlling the domain structure (sea-island structure) of the layer A can be used. More specifically, it is effective, for example, to produce a compound resin raw material obtained by pre-kneading a cycloolefin-based resin and a polypropylene-based resin as a raw material of the layer A, to form a sheet by melt extrusion after controlling the content of the cycloolefin-based resin, and to set the preheating temperature before stretching in the transverse direction in biaxial stretching to be higher than the stretching temperature in the transverse direction by 5°C to 15°C inclusive at an area stretch ratio of 36.0 times or more (preferably 40.0 times or more).

As an effect brought about by producing the compound resin raw material in advance, an effect of enhancing stretchability can be expected. This is because the two types of resins are more uniformly mixed than in the case of simply mixing the resins during film formation, and thus the resin as the island component is finely dispersed in the resin as the sea component. In addition, it is also preferable to dilute the compound resin raw material prekneaded with a twin-screw extruder as a masterbatch so as to contain the cycloolefin-based resin at a high concentration, because the dispersibility of the cycloolefin-based resin is enhanced.

The reason why E'121/E'50 can be adjusted to a preferable range by the above method is considered to be that the resin is prevented from peeling at the sea-island interface of the sea-island structure in which the polypropylene-based resin is regarded as the sea and the cycloolefin-based resin is regarded as the island in the layer A, and the island structure becomes small or thin, and as a result, the mobility of the amorphous chain in the film can be suppressed by the synergistic effect of the high thermal stability of the cycloolefin-based resin and the excellent stretchability of the polypropylene-based resin.

It is important that the first polyolefin-based film of the present invention has a thermal shrinkage rate of - 2% or more and 100 or less in the main orientation axis direction at 150°C. As the film satisfies the above requirement, for example, when the layer D to be described later is laminated by vapor deposition, it is possible to inhibit defects such as pinholes and cracks from being generated in the layer D by the film shrinking by heat during vapor deposition, and to improve the water vapor barrier property and the oxygen barrier property of a laminated body in which the layer D is laminated. In addition, when high-temperature treatment such as heat sterilization treatment is performed after bag-forming processing, it is possible to inhibit the shrinkage of the film, and to prevent the deterioration in the water vapor barrier property and the oxygen barrier property. From the above viewpoint, the upper limit of the thermal shrinkage rate in the main orientation axis direction at 150°C is preferably 8%, more preferably 6%, and still more preferably 4%. On the other hand, the lower limit of the thermal shrinkage rate in the main orientation axis direction at 150°C is preferably -1%. The thermal shrinkage rate in the main orientation axis direction at 150°C can be measured by the method to be described later.

The main orientation axis direction in the present invention refers to a direction in which molecules are most strongly oriented in the plane of the polyolefin-based film. Normally, when biaxial stretching is performed in the production of the polyolefin-based film, stretching is performed in the machine direction and the transverse direction, but in general, the main orientation axis direction is the direction in which the stretch ratio is larger. When the stretch directions (the machine direction and the transverse direction) are specified but the stretch ratios are unknown, the maximum load until breakage is measured in a tensile test to be described later, and the direction in which the measured value is large can be defined as the main orientation axis direction.

As described above, when the stretch direction and the stretch ratio are known, the main orientation axis direction can be easily specified, but in a case of a film where these are unknown, the main orientation axis direction can be specified by the following method. Specifically, a film is prepared and cut into a rectangle of 150 mm in length × 10 mm in width with an arbitrary direction directed upward to provide a sample <1>, and the direction of the long sides of the sample <1> is defined as 0°. Next, a sample <2> having the same size is collected such that the long side direction is directed in a direction rotated rightward by 15° from the 0° direction. Subsequently, samples <3> to <12> are collected in the same manner by similarly rotating the long side direction of the rectangular sample by 15° each. Next, the maximum load until the sample breaks in a tensile test to be described below is measured for each rectangular sample, and the direction in which the measured value is the largest is defined as the main orientation axis direction.

When a sample of 150 mm in length × 10 mm in width cannot be obtained and the tensile test to be described later cannot be performed, the crystal orientation of the $\alpha$ crystal (110) plane by wide-angle X-ray is measured as follows and the main orientation axis direction is determined on the basis of the following criteria. Specifically, an X-ray (CuK$\alpha$ ray) is made incident on the film surface in a direction perpendicular thereto, a crystal peak at $2\theta$ = about 14° ($\alpha$ crystal (110) plane) is scanned in a circumferential direction, and a direction in which the diffraction intensity is the highest in the resulting diffraction intensity distribution is taken as the main orientation axis direction.

The method for satisfying the thermal shrinkage rate of the film in the main orientation axis direction at 150°C of -2% or more and 10% or less is not particularly limited, and for example, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, and to set the area stretch ratio in biaxial stretching to 36.0 times or more (preferably 40.0 times or more) and then set the preheating temperature before stretching in the transverse direction to be higher than the stretching temperature in the transverse direction by 5°C or more and 15°C or less.

It is important that the first polyolefin-based film of the present invention has a tensile elongation of 20% or more and 300% or less in a direction orthogonal to the main orientation axis. Here, the direction orthogonal to the main orientation axis direction refers to a direction orthogonal to the main orientation axis direction in the plane of the film. When the tensile elongation in the direction orthogonal to the main orientation axis of the film is 20% or more, the polyolefin-based film can be prevented from breaking under tension during vapor deposition processing or transportation, which may occur particularly when the film is used for packing, and can also be prevented from breaking in bag making processing when the film is formed into a packed body. From the above viewpoint, the lower limit of the tensile elongation in the direction orthogonal to the main orientation axis is preferably 27%, and more preferably 35%. When the tensile elongation is 300% or less, deformation of the polyolefin-based film under tension during vapor deposition processing or transportation can be suppressed, and deformation during bag making processing when a packed body is formed can also be suppressed. On the other hand, the upper limit of the tensile elongation in the direction orthogonal to the main orientation axis is preferably 250%, more preferably 200%, still more preferably 120%, and particularly preferably 60%. Here, the tensile elongation is measured at a tensile speed of 300mm/min in an environment of 23°C. The tensile elongation can be measured by a known tensile tester, and the detailed procedure thereof will be described later.

The method for adjusting the tensile elongation in the direction orthogonal to the main orientation axis to 20% or more and 300% or less is not particularly limited, and for example, a method of forming a polyolefin-based film into a biaxially oriented film may be used. In addition, it is also preferable to produce a compound resin raw material obtained by pre-kneading a cycloolefin-based resin and a polypropylene-based resin as a raw material of the layer A, and to form a sheet by melt extrusion after controlling the content of the cycloolefin-based resin.

It is important that the first and second polyolefin-based films of the present invention have at least one layer (layer A) containing a cycloolefin-based resin and a polypropylene-based resin from the viewpoint of improving thermal stability. By adopting such a mode, the obtained polyolefin-based film has excellent thermal stability and, for example, provides excellent barrier properties for laminated bodies having the layer D vapor-deposited thereon, which will be described later, due to the effects of the high thermal stability of the cycloolefin-based resin and the excellent stretchability of the polypropylene-based resin.

The polyolefin-based film of the present invention may have any of a single film configuration including only one layer A, a laminated structure in which a total of two or more layers A are laminated in the thickness direction, and a laminated structure in which a total of two or more layers including a layer A and a layer other than the layer A are laminated in the thickness direction. However, from the viewpoint of exhibiting stretchability of the film, excellent withstand voltage properties and reliability in a high-temperature environment, and processability, when a layer containing a polypropylene-based resin as a main component, containing a polypropylene-based resin in a larger amount than that in the layer A, and containing a low content of cycloolefin-based resin is defined as a layer B, it is preferable that the layer B be included.

Specific modes of the laminated structure of the polyolefin-based film of the present invention include, for example, a two layer structure of the layer A/the layer B, a two kind three layer structure of the layer B/the layer A/the layer B, and the layer A/the layer B/the layer A, a three kind three layer structure of the layer B/the layer A/the layer C, and the layer A/the layer B/the layer C, each having a layer (layer C) having a melting point lower than those of the layer A and the layer B to be described later and having a melting point of 100°C or more and 150°C or less, and a structure of four or more layers having the layer A as an inner layer of the film or an outermost layer on both surfaces of the film, and from the viewpoint of stretching film formation stability, the structure of the layer B/the layer A/the layer B or the layer B/the layer A/the layer C is preferred. Here, when the total thickness of the film is 100%, the lower limit of the thickness of the layer A is preferably 10%, more preferably 35%, still more preferably 60%, and particularly preferably 80%. The upper limit is 100% including a single layer. By setting the thickness of the layer A within such a range, the polyolefin-based film has a structure that is very stable to heat during vapor deposition, so that the water vapor barrier property and the oxygen barrier property can be improved when the layer D to be described later including the vapor-deposited layer is laminated to form the laminated body.

When the polyolefin-based film of the present invention includes a plurality of layers A, the compositions thereof may be the same or different. The lamination method may be a feedblock method or a multimanifold method by coextrusion, a method by coating or the like. From the viewpoint of production efficiency and cost, a lamination method by coextrusion (for example, melt coextrusion) is preferable.

In the polyolefin-based film of the present invention, the lower limit of the content of the cycloolefin-based resin in the entire film is preferably 1% by mass, more preferably 2% by mass, and still more preferably 3% by mass. On the other hand, the upper limit is preferably 39% by mass, more preferably 25% by mass, more preferably 19% by mass, still more preferably 14% by mass, particularly preferably 9% by mass, and most preferably 7.5% by mass. The lower limit of the content of the cycloolefin-based resin in the film layer A is preferably 1% by mass, and more preferably 2% by mass. On the other hand, the upper limit is preferably 39% by mass, more preferably 25% by mass, more preferably 19% by mass, still more preferably 14% by mass, particularly preferably 10% by mass, and most preferably 9% by mass. By setting the contents of the cycloolefin-based resin in the entire film and in the film layer A to be in preferable ranges, the area magnification at the time of biaxial stretching is increased, and the water vapor barrier property and the oxygen barrier property of the laminated body in which the layer D is vapor-deposited on the film can be improved.

When a section obtained by cutting the layer A along a plane parallel to the main orientation axis direction and the thickness direction is defined as the section X, in a rectangle measuring 1 um × 2 um defined in the section X such that a pair of short sides are parallel to the thickness direction, it is important that the second polyolefin-based film of the present invention includes two or more domains of the cycloolefin-based resin passing through the pair of short sides. In the polyolefin-based film of the present invention, the number of domains of the cycloolefin-based resin passing through the pair of sides parallel to the thickness direction is preferably four or more, more preferably six or more. The upper limit is not particularly limited but is set to 100. It is preferable that the first polyolefin-based film of the present invention satisfies the above requirement, and the same applies to the preferable numerical range.

It is considered that by setting the number of domains of the cycloolefin-based resin passing through the pair of sides parallel to the thickness direction to be two or more, the cycloolefin-based resin is finely dispersed in a flatter manner in the plane, and the mobility of the amorphous chain in the film can be suppressed by the synergistic effect of the high thermal stability of the cycloolefin-based resin and the excellent stretchability of the polypropylene-based resin. Therefore, for example, when the layer D to be described later is laminated by vapor deposition, it is possible to inhibit defects such as pinholes and cracks from being generated in the layer D by the film shrinking by heat during vapor deposition, and to improve the water vapor barrier property and the oxygen barrier property of a laminated body in which the layer D is laminated. In addition, when high-temperature treatment such as heat sterilization treatment is performed after bag-forming processing, it is possible to inhibit the shrinkage of the film, and to prevent the deterioration in the water vapor barrier property and the oxygen barrier property.

In the section X, as a method for setting the number of domains of a cycloolefin-based resin passing through the pair of sides parallel to the thickness direction to two or more, a method of controlling the domain structure (sea-island structure) of the layer A can be used. For example, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, to perform biaxial stretching at an area stretch ratio of 36.0 times or more (preferably 40.0 times or more), and to perform a heat treatment after the biaxial stretching.

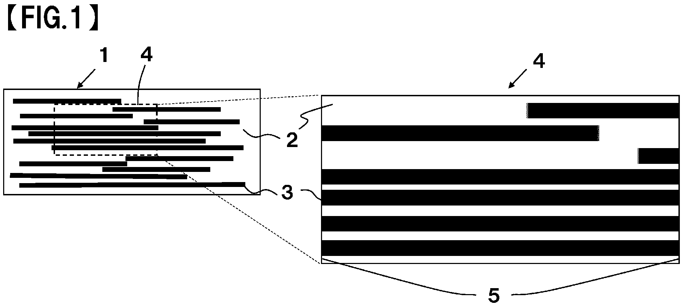

A method for defining the rectangle measuring 1 um × 2 um in the section X such that a pair of sides are parallel to the thickness direction and a method for determining the number of domains of the cycloolefin-based resin passing through the pair of sides parallel to the thickness direction in the polyolefin-based film of the present invention will be described with reference to the drawings. Fig. 1 schematically shows the rectangle measuring 1 um × 2 um defined in the section X of the polyolefin-based film according to one embodiment of the present invention such that a pair of sides are parallel to the thickness direction, and shows domains of the cycloolefin-based resin passing through the pair of sides parallel to the thickness direction of the rectangle. Reference signs 1 to 5 in Fig. 1 represents, in order, a part of the section X, a sea portion, an island portion (domain), the rectangle measuring 1 um × 2 um defined in the section X such that a pair of sides are parallel to the thickness direction, and a pair of sides parallel to the thickness direction. The left diagram of Fig. 1 shows a part of the section X, and the right diagram is an enlarged view of the rectangle measuring 1 um × 2 um indicated by a broken line defined in the section X such that a pair of sides is parallel to the thickness direction. In the polyolefin-based film of the present invention, the sea portion is the polypropylene-based resin, and the island portion is the cycloolefin-based resin.

When the rectangle measuring 1 um × 2 um is defined in the section X such that a pair of sides are parallel to the thickness direction, the base of the rectangle is set in the sea portion, and when a domain is located on a side facing the base, the domain is considered to be absent and is not counted as the domains (in the example of Fig. 1, such a domain does not exist).

Here, the "domains of the cycloolefin-based resin passing through a pair of sides parallel to the thickness direction" refer to domains of the cycloolefin-based resin passing through both of the pair of sides parallel to the thickness direction. That is, in the example of Fig. 1 (right diagram), the fourth to seventh domains from the top correspond thereto, and the first to third domains from the top do not correspond thereto. Therefore, the number of the "domains of the cycloolefin-based resin passing through the pair of sides parallel to the thickness direction" in this example is four.

It is preferable that in the polyolefin-based film of the present invention, when a layer having a melting point lower than those of the layer A and the layer B and having a melting point of 100°C or more and 150°C or less is defined as the layer C, the layer B is positioned on one outermost surface and the layer C is preferably positioned on the other outermost surface. Here, since the layer C melts at a temperature lower than the melting points of the layer A and the layer B, the layer C can serve as a heat-sealing layer by melting only the layer C at a temperature lower than the melting points of the layer A and the layer B. The heat seal refers to, for the achievement of the form as a bag obtained by filling with/packing contents, the condition of (or step for) films melted and pressurebonded through a heat treatment, and the heat sealability refers to a property on the film side melted/pressurebonded by heating.

The layer C preferably includes a low-melting-point polypropylene-based resin with low crystallinity from the viewpoint of making the layer C a heat-sealing layer that functions at lower temperatures and faster speeds, and specifically, an ethylene-propylene random copolymer, an ethylene-propylene-butene random copolymer, a propylene-butene random copolymer, and the like can be preferably used. From the above viewpoint, the melting point of the layer C is preferably 110°C or higher and 148°C or lower, more preferably 120°C or higher and 145°C or lower. The melting point of the layer C can be read as the peak temperature with the highest heat of melting among endothermic peaks due to fusion, obtained when the layer C of the film is analyzed by differential scanning calorimetric analysis (DSC).

In the polyolefin-based film of the present invention, when tanδ in the main orientation axis direction at 50°C and 121°C, obtained at a frequency of 10 Hz in a dynamic viscoelasticity measurement, is defined as tanδ50 and tand121, respectively, tanδ50/tanδ121 is preferably more than 0.25 and 0.99 or less. The tanσ50/tanσ121 of more than 0.25 means that the temperature dependency of the loss tangent (tanδ) is small. That is, the amorphous molecular chain in the film is less likely to move under a high-temperature environment, and for example, when the layer D to be described below is vapor-deposited, defects such as pinholes and cracks generated in the layer D due to deformation of the film by heat during vapor deposition can be suppressed, and the water vapor barrier property and the oxygen barrier property of the laminated body having the layer D vapor-deposited thereon can be improved. In addition, since deformation of the film due to a high temperature treatment such as a heat sterilization treatment performed after bag-forming processing is suppressed, deterioration of water vapor barrier properties and oxygen barrier properties associated with such a treatment can also be reduced. On the other hand, from the viewpoint of feasibility, the upper limit of $\tan\delta 50/\tan\delta 121$ is set to 0.99 or less. The $\tan\delta$ at each temperature can be determined from the storage modulus and a loss modulus read from a viscoelasticity-temperature curve by a dynamic viscoelasticity method, and the measurement method will be described later together with the measurement method of each modulus.

From the above viewpoint, the lower limit of $\tan\delta 50/\tan\delta 121$ of the film is 0.28, preferably 0.31, more preferably 0.33, and still more preferably 0.35. On the other hand, the upper limit of $\tan\delta 50/\tan\delta 121$ is preferably 0.89, and more preferably 0.69.

In order to control $\tan\delta 50/\tan\delta 121$ to be more than 0.25 and 0.99 or less, for example, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, and to set the preheating temperature before stretching in the transverse direction in biaxial stretching to be higher than the stretching temperature in the transverse direction by 5°C or more and 15°C or less at an area stretch ratio of 36.0 times or more (preferably 40.0 times or more).

In the polyolefin-based film of the present invention, from the viewpoint of imparting high barrier properties, a ten point region height (S10z) of at least one of the surfaces of the layer B measured by three dimensional non-contact surface profile measurement is preferably 150 nm or more and 900 nm or less. Here, the ten point region height (S10z) of the surfaces is a parameter obtained by S5p + S5v as the sum of a five point peak region height (S5p: the average height of the highest to fifth highest peaks among peaks in the reference region) and a five point valley region depth (S5v: the average height of the deepest to fifth deepest valleys (positive value) among valleys in the reference region) in an evaluation field image. In other words, a smaller value of (S10z) indicates a surface with less unevenness disparity, while a larger value of (S10z) indicates a surface with more unevenness disparity.

For example, a film surface that does not contain particles tends to have a smaller (S10z), and a film that contains coarse particles tends to have a larger (S10z). From the above viewpoint, the lower limit of the ten point region height (S10z) of the surfaces is preferably 180 nm, and more preferably 200 nm. On the other hand, the upper limit is preferably 700 nm, more preferably 400 nm. In order to control the ten point region height (S10z) of the surfaces to be 150 nm or more and 900 nm or less, for example, it is effective to adopt a configuration in which the layer B to be described later contains 1% by mass or more and 10% by mass or less of polypropylene-based resins and thermoplastic resins which are incompatible with polypropylene-based resins.

It is preferable that the polyolefin-based film of the present invention contains at least one of metal particles and inorganic compound particles. It is preferable that, from the viewpoint of imparting high barrier properties and film surface smoothness, for example, any of aluminum, aluminum oxide (sometimes referred to as alumina), silicon oxide, cerium oxide, calcium oxide, diamond-like carbon films, or mixtures thereof, is suitably used as the inorganic compound particles, and it is particularly preferable to include at least one of alumina, silica, and oxides of aluminum and silicon.

The type of the particles can be identified, for example, by performing energy dispersive X-ray analysis (EDS) and EELS analysis using GATAN GIF "Tridiem" as necessary. In the EELS analysis, the component of the particles can be identified by collating the obtained EELS spectrum with the EELS spectrum of a commercially available metal compound or publicly available EELS spectrum data. As a measuring device, JED-2300F (semiconductor detector, DrySD Extra, manufactured by JEOL Ltd.) or the like can be used for EDS, and a field emission transmission electron microscope JEM-2100F (manufactured by JEOL Ltd., acceleration voltage 200 kV) or the like can be used for EELS analysis.

It is preferable that the aspect ratio of the metal particles or the inorganic compound particles observed in a section of the polyolefin-based film of the present invention cut along a plane parallel to the main orientation axis direction and perpendicular to the thickness direction is 2 or more. Since the more layered the particles are, the higher the barrier properties can be exhibited, the aspect ratio is more preferably 10 or more, still more preferably 30 or more, and particularly preferably 50 or more. The upper limit of the aspect ratio is not particularly limited but is set to 500.

The method for adjusting the aspect ratio of the particles in the film to 2 or more is not particularly limited, and examples thereof include a method of using, as a raw material, a laminated body having a polyolefin-based film layer to be described below and a layer (layer D) containing a metal and an inorganic compound in a total amount of more than 50% by mass and 100% by mass or less. In this case, in the melting step of melting the laminated body, it is preferable to melt the laminated body with high shear, to melt the laminated body having a thin layer D, or the like. The aspect ratio of a particle can be calculated as a ratio of the length of the long side to the length of the short side of a rectangle having the smallest area surrounding a sectional image of the particle obtained by observation with a scanning electron microscope (SEM).

It is preferable that in the polyolefin-based film of the present invention, at least one film surface glossiness is more than 130% and 160% or less. The film surface glossiness exceeding 130% means that the surface is smooth because the light scattering density on the film surface is low. Therefore, by making the film surface glossiness larger than 130%, defects such as pinholes and cracks generated in the layer D when the laminated body having the layer D vapor-deposited thereon is formed can be suppressed, and the water vapor barrier property and the oxygen barrier property of the laminated body can be improved. On the other hand, when the film surface glossiness is more than 160%, it means that the surface is excessively smoothed, and the film may tend to be extremely lowered in slidability. Therefore, by setting the film surface glossiness to 160% or less, deterioration of the handling property at the time of vapor-depositing the layer D and generation of wrinkles associated therewith are suppressed, and therefore, the water vapor barrier property and the oxygen barrier property of the laminated body are improved. From the above viewpoint, the film surface glossiness is more preferably 1350 or more and 149% or less, and still more preferably 1400 or more and 148% or less. The glossiness can be measured in accordance with JIS K-7105 (1981), and the details thereof will be described later.

In order to control the film surface glossiness to be more than 130% and 160% or less or to be in the preferable range, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, to form a laminated structure having at least the layer A and the layer B, to control the temperature at the time of cooling and solidifying the molten sheet to 30°C or less, and to set the area stretch ratio to 36.0 times or more (preferably 40.0 times or more).

The polyolefin-based film of the present invention is preferably a biaxially oriented film. By forming the biaxially oriented film, it becomes easy to control the storage modulus in the main orientation axis direction at 50°C and 121°C, obtained at a frequency of 10 Hz in a dynamic viscoelasticity measurement, and the tensile elongation in the direction orthogonal to the main orientation axis to be in the preferable ranges of the present invention. The biaxially oriented film is a film in which molecular chains are oriented in two directions orthogonal to each other, and is usually obtained by stretching in two directions orthogonal to each other.

The polyolefin-based film of the present invention can be widely used for industrial applications, etc. such as packing applications, release applications, tape applications, and film capacitor applications, and the thickness is preferably more than 0.5 um and 60 um or less from the viewpoint of being suitable for film capacitor applications and packing applications. By making the thickness larger than 0.5 um, the slack during vapor deposition processing or transportation can be suppressed, and further, the film breakage due to tension can be reduced. From the above viewpoint, the lower limit of the thickness is more preferably 0.8 um, still more preferably 1.2 um for capacitor applications, and is more preferably 10 $\mu$m, still more preferably 11 um for packing applications. In contrast, the thickness is set to be 60 um or less, thereby allowing the handleability to be improved, and also allowing the production cost to be reduced. From the above viewpoint, the upper limit of the thickness is more preferably 5.5 um, still more preferably 4.0 $\mu$m, and particularly preferably 3.2 um for film capacitor applications, and is more preferably 50 um, still more preferably 40 um, and particularly preferably 19 um for packing applications. Further, the thickness of the film can be determined by measuring the thickness at 10 arbitrary positions of the film with a contact-type micrometer under an atmosphere of 23°C and 65% RH, and obtaining the arithmetic average value for all of the obtained measurement values.

A method for setting the thickness of the polyolefin-based film to more than 0.5 $\mu$m and 60 $\mu$m or less or within the above preferable range is not particularly limited, and for example, a method of adjusting a discharge amount at the time of melt-extrusion of the polyolefin-based resin composition, a method of adjusting the rotation speed of the cast drum at the time of cooling solidification of the molten sheet, a method of adjusting a lip gap of a spinneret for discharging the molten sheet, a method of adjusting the stretch ratio in the machine direction, a method of adjusting the stretch ratio in the transverse direction, and the like can be used. More specifically, the thickness of the polyolefin-based film can be reduced by reducing the discharge amount, increasing the rotation speed of the cast drum, reducing the lip gap of the spinneret, or increasing the stretch ratio in the machine direction or transverse direction.

Subsequently, a resin that is preferably used for the polyolefin-based film of the present invention will be described. It is preferable that the layer A of the polyolefin-based film of the present invention contains a polypropylene-based resin as a main component and has a melting point of 135°C or more and 175°C or less, from the viewpoint of controlling the storage modulus in the main orientation axis direction at 50°C and 121°C, obtained at a frequency of 10 Hz in a dynamic viscoelasticity measurement, the thermal shrinkage rate in the main orientation axis direction at 150°C, and the tensile elongation in the direction orthogonal to the main orientation axis to be in the above-mentioned ranges. From the above viewpoint, the lower limit of the melting point of the layer A is preferably 140°C, more preferably 145°C, still more preferably 150°C, particularly preferably 157°C, and most preferably 163°C. On the other hand, the upper limit of the melting point of the layer A is preferably 173°C, more preferably 171°C, and particularly preferably 169°C. By setting the melting point of the layer A in such a range, it becomes easy to control E'121/E'50 of the film and the thermal shrinkage rate in the main orientation axis direction at 150°C in the above-mentioned preferable ranges. Note that the melting point of the layer A can be read as the peak temperature of a peak having the largest peak area among endothermic peaks due to fusion of the 2nd Run when the layer A of the polyolefin-based film is analyzed by differential scanning calorimetric analysis (DSC). The method for measuring the melting point will be described in detail later.

The polypropylene-based resin used as the main component of the layer B of the polyolefin-based film of the present invention preferably has a meso-pentad fraction of 0.900 or more. The lower limit of the meso-pentad fraction is preferably 0.930, more preferably 0.960, and still more preferably 0.970. The meso-pentad fraction is an index indicating the stereoregularity of a crystal phase of the polypropylene-based resin, and is measured by a nuclear magnetic resonance method (NMR method). In the polyolefin-based film of the present invention, since the layer B contains the polypropylene-based resin having a meso-pentad fraction of 0.90 or more as the main component, the degree of crystallinity of the layer B becomes high, and there is an effect of enhancing the orientation of the polypropylene film (particularly the layer B). As a result, when the polypropylene film is used in packing applications, it is possible to inhibit deformation due to heat during vapor deposition, to facilitate uniform lamination of the layer D to be described later including a vapor-deposited film, and to inhibit defects such as pinholes and cracks in the layer D. Therefore, an effect of improving the water vapor barrier property and the oxygen barrier property of the laminated body in which the layer D is laminated can be obtained. The upper limit of the meso-pentad fraction is preferably 0.99, more preferably 0.98, from the viewpoint of feasibility and increasing the adhesion between the layer B and the layer D.

The polypropylene-based resin used for the layer B of the polyolefin-based film of the present invention may be one kind or a mixture of two or more kinds. However, from the viewpoint of reducing deformation of the film due to heat during vapor deposition, the melting point of the polypropylene-based resin as the main component is preferably 151°C or more, more preferably 153°C or more, still more preferably 155°C or more, particularly preferably 158°C or more, and most preferably 160°C or more. When the polypropylene-based resin as the main component of the layer B has a melting point of 151°C or more, the crystallinity of the layer B is kept high, so that the deformation of the polypropylene film due to heat during vapor deposition is reduced. That is, when the layer D to be described later is laminated by vapor deposition, defects such as pinholes and cracks in the layer D are reduced, and the water vapor barrier property and the oxygen barrier property of the laminated body in which the layer D is laminated are enhanced.

In a case where two or more kinds of polypropylene-based resins are used for the layer B of the polyolefin-based film of the present invention, a modified polypropylene-based resin is suitably used as the polypropylene-based resin other than the main component. By using such a resin, the content of a nitrogen element or an oxygen element on the layer B surface increases, and when the layer D to be described later is laminated, the adhesion between the layer B and the layer D can be enhanced. Examples of the modified polypropylene-based resin include "ADMER" (registered trademark) series (unsaturated carboxylic acid-modified product of polypropylene) of Mitsui Chemicals, Inc. and "UMEX" (registered trademark) series (acid-modified low molecular weight polypropylene-based resin) of Sanyo Chemical Industries, Ltd. From the viewpoint of keeping the crystallinity of the layer B high, the content of the modified polypropylene-based resin in the layer B is preferably 40% by mass or less, more preferably 30% by mass or less, and still more preferably 20% by mass or less, when the total amount of the resins of the layer B is taken as 100% by mass.

In addition, from the viewpoint of imparting surface layer lubricity, an incompatible resin which is incompatible with the polypropylene-based resin may be added to the layer B of the polyolefin-based film of the present invention within a range not inhibiting the effect of the present invention. It is preferable that the addition amount of the incompatible resin which is incompatible with the polypropylene-based resin is 1% by mass or more and 10% by mass or less when the total amount of the resins constituting the layer B is 100% by mass. From the viewpoint of imparting surface layer lubricity of the polyolefin-based film, the addition amount of the incompatible resin which is incompatible with the polypropylene-based resin is preferably 2% by mass or more, and more preferably 3% by mass or more, and the upper limit of the content of the incompatible resin is preferably 9% by mass, and more preferably 8% by mass.

Here, as the incompatible resin, polymethylpentene-based resin is particularly preferred because polymethylpentene-based resin has a relatively high affinity with polypropylene-based resin and can reduce the domain size. In addition, the melting point of the polymethylpentene-based resin is preferably 185°C to 240°C inclusive, and more preferably 220°C to 240°C inclusive, from the viewpoint of providing extrusion stability in the case of blending with polypropylene and surface unevenness through the use of a domain sea-island structure. In view of these properties, in the polypropylene film of the present invention, a polymer having 80 mol% or more and 100 mol% or less of the 4-methylpentene-1-derived component units out of 100 mol% of the total component units is preferable. For example, "TPX" (registered trademark) MX series, "TPX" (registered trademark) DX series, and "TPX" (registered trademark) RT series sold as "TPX" (registered trademark) series by Mitsui Chemicals, Inc. can be preferably used. Specifically, "TPX" (registered trademark) MX002, MX004, DX310, DX845, and RT31 are preferable from the viewpoint of having relatively high affinity with the polypropylene-based resin and being capable of reducing the domain size.

The cycloolefin-based resin used in the polyolefin-based film of the present invention will be described. The cycloolefin-based resin is obtained, for example, by polymerizing mainly a cycloolefin monomer.

Examples of the cycloolefin monomer include monocyclic olefins such as cyclobutene, cyclopentene, cycloheptene, cyclooctene, cyclopentadiene, and 1,3-cyclohexadiene, bicyclic olefins such as bicyclo[2,2,1]hept-2-ene, 5-methyl-bicyclo[2,2,1]hept-2-ene, 5,5-dimethyl-bicyclo[2,2,1]hept-2-ene, 5-ethyl-bicyclo[2,2,1]hept-2-ene, 5-butyl-bicyclo[2,2,1]hept-2-ene, 5-ethylidene-bicyclo[2,2,1]hept-2-ene, 5-hexyl-bicyclo[2,2,1]hept-2-ene, 5-octyl-bicyclo[2,2,1]hept-2-ene, 5-octadecyl-bicyclo[2,2,1]hept-2-ene, 5-methylidene-bicyclo[2,2,1]hept-2-ene, 5-vinyl-bicyclo[2,2,1]hept-2-ene, and 5-propenyl-bicyclo[2,2,1]hept-2-ene, tricyclic olefins such as tricyclo[4,3,0,12.5]deca-3,7-diene, tricyclo [4,3,0,12.5]dec-3-ene, tricyclo[4,3,0,12.5]undeca-3,7-diene, tricyclo[4,3,0,12.5]undeca-3,8-diene, tricyclo[4,3,0,12.5] undec-3-ene, 5-cyclopentyl-bicyclo[2,2,1]hept-2-ene, 5-cyclohexyl-bicyclo[2,2,1]hept-2-ene, 5-cyclohexenylbicyclo [2,2,1]hept-2-ene, and 5-phenyl-bicyclo[2,2,1]hept-2-ene, tetracyclic olefins such as tetracyclo[4,4,0,12.5,17.10]dodec-3-ene, 8-methyltetracyclo[4,4,0,12.5,17.10]dodec-3-ene, 8-ethyltetracyclo[4,4,0,12.5,17.10]dodec-3-ene, 8-methylidenetetracyclo[4,4,0,12.5,17.10]dodec-3-ene, 8-ethylidenetetracyclo[4,4,0,12.5,17.10]dodec-3-ene, 8-vinyltetracyclo [4,4,0,12.5,17.10]dodec-3-ene, and 8-propenyl-tetracyclo[4,4,0,12.5,17.10]dodec-3-ene, and polycyclic olefins such as 8-cyclopentyl-tetracyclo[4,4,0,12.5,17.10]dodec-3-ene, 8-cyclohexyl-tetracyclo[4,4,0,12.5,17.10]dodec-3-ene, 8-cyclohexenyl-tetracyclo[4,4,0,12.5,17.10]dodec-3-ene, 8-phenyl-cyclopentyl-tetracyclo[4,4,0,12.5,17.10]dodec-3-ene, tetracyclo[7,4,13.6,01.9,02.7]tetradeca-4,9,11,13-tetraene, tetracyclo[8,4,14.7,01.10,03.8]pentadeca-5, 10, 12,14-tetraene, pentacyclo[6,6,13.6,02.7,09.14]-4-hexadecene, pentacyclo[6,5,1,13.6,02.7,09.13]-4-pentadecene, pentacyclo [7,4,0,02.7,13.6,110.13]-4-pentadecene, heptacyclo[8,7,0,12.9,14.7,111.17,03.8,012.16]-5-eicosene, heptacyclo [8,7,0,12.9,03.8,14.7,012.17,113.16]-14-eicosene, and a tetramer of cyclopentadiene. These cycloolefin monomers can be used singly or in combination of two or more kinds.

Among the above-mentioned cycloolefin monomers, bicyclo[2,2,1]hept-2-ene (hereinafter referred to as norbornene), a tricyclic olefin (hereinafter referred to as tricyclodecene) having 10 carbon atoms such as tricyclo[4,3,0,12.5] dec-3-ene, a tetracyclic olefin (hereinafter referred to as tetracyclododecene) having 12 carbon atoms such as tetracyclo [4,4,0,12.5,17.10]dodec-3-ene, cyclopentadiene, or 1,3-cyclohexadiene is preferably used from the viewpoint of productivity and surface properties.

The cycloolefin-based resin may be either of a resin (hereinafter sometimes referred to as COP) obtained by polymerizing the cycloolefin monomer alone and a resin (hereinafter sometimes referred to as COC) obtained by copolymerizing the cycloolefin monomer with a chain olefin monomer, or a mixture thereof, as long as the total amount of the component units derived from the cycloolefin monomer in 100 mol% of the polymer is more than 20 mol% and is 100 mol% or less.

The method for producing the COP may be a publicly known method such as addition polymerization or ring-opening polymerization of a cycloolefin monomer. Examples of the method include a method of subjecting norbornene, tricyclodecene, tetracyclodecene, or a derivative thereof to ring-opening metathesis polymerization and then hydrolyzing the resulting polymer, a method of subjecting norbornene or a derivative thereof to addition polymerization, and a method of subjecting cyclopentadiene or cyclohexadiene to 1,2- or 1,4-addition polymerization and then hydrolyzing the resulting polymer. Among them, the method of subjecting norbornene, tricyclodecene, tetracyclodecene, or a derivative thereof to ring-opening metathesis polymerization and then hydrolyzing the resulting polymer is more preferable from the viewpoint of productivity and moldability.

In the case of a COC, examples of preferable chain olefin monomers for copolymerization include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene. Among them, ethylene can be particularly preferably used from the viewpoint of productivity and cost. Further, the method for producing a resin obtained by copolymerizing a cycloolefin monomer with a chain olefin monomer may be a publicly known method such as addition polymerization of a cycloolefin monomer and a chain olefin monomer. Examples of the method include addition polymerization of norbornene or a derivative thereof and ethylene. Among these, from the viewpoint of productivity and moldability, binary or ternary copolymerization consisting of norbornene or tricyclodecene as the cycloolefin monomer and ethylene and/or propylene as the chain olefin monomer is more preferred.

It is preferable that the cycloolefin-based resin used in the polyolefin-based film of the present invention is amorphous. The glass transition temperature of the amorphous cycloolefin-based resin is preferably 125°C or more, more preferably 130°C or more, still more preferably 135°C or more from the viewpoint of controlling $E'121/E'50$ of the polyolefin-based film and the thermal shrinkage rate in the main orientation axis direction at 150°C to be in the above-mentioned preferable ranges. A glass transition temperature of 125°C or more improves thermal stability when the film is made. The upper limit of the glass transition temperature is not particularly limited but is 200°C from the viewpoint of the film formation property. In the polyolefin-based film of the present invention, the statement that the cycloolefin-based resin is amorphous means that a melting peak temperature (Tm) obtained when the temperature of the cycloolefin-based resin is raised from 30°C to 260°C at 20°C/min with a differential scanning calorimeter DSC is not observed.

The polyolefin-based film of the present invention may contain a resin other than the polypropylene resin and the cycloolefin-based resin as long as the object of the present invention is not impaired even when the polypropylene-based resin is the main component. Specific examples of the resin include vinyl polymer resins containing various polyolefin-based resins, polyester-based resins, polyamide-based resins, polyphenylene sulfide-based resins, polyimide-based resins, and polycarbonate-based resins. Particularly preferable examples include polymethylpentene and syndiotactic polystyrene. The content of the resin other than the polypropylene resin and the cycloolefin-based resin is preferably less than 3% by mass, more preferably 2% by mass or less, still more preferably 1% by mass or less, when the total amount of the resin components constituting the polyolefin-based film is 100% by mass. When the content of the resin other than the polypropylene resin and the cycloolefin-based resin is 3% by mass or more, the influence of the domain interface increases, and thus the stretchability may be reduced, or the water vapor barrier properties and the oxygen barrier properties of the laminated body in which the layer D is laminated may be reduced. Note that a layer containing these components is not particularly limited.

The polyolefin-based film of the present invention can be widely used for industrial applications, etc. such as packing applications, release applications, tape applications, and film capacitor applications, and, for example, can be suitably used as a polyolefin-based film which is excellent in structural stability against heat during vapor deposition and has favorable water vapor barrier properties and oxygen barrier properties against heat during heat sterilization treatment, particularly when used for packing applications.

<Laminated body>

Subsequently, the laminated body of the present invention will be described. The laminated body of the present invention includes the layer (layer D) containing a metal and an inorganic compound in a total amount of more than 50% by mass and 100% by mass or less on at least one surface of the polyolefin-based film of the present invention. Here, the "layer containing a metal and an inorganic compound in a total amount of more than 50% by mass and 100% by mass or less" refers to a layer containing only the metal in the amount of more than 50% by mass, a layer containing only the inorganic compound in the amount of more than 50% by mass, and a layer containing both the metal and the inorganic compound in the total amount of more than 50% by mass, when all the components constituting the layer are taken as 100% by mass. As the metal and/or the inorganic compound of the layer D, for example, any of aluminum, aluminum oxide, silicon oxide, cerium oxide, calcium oxide, a diamond-like carbon film, or a mixture thereof is suitably used from the viewpoint of improving the adhesion to the film, improving the gas barrier property when laminated on the film, and reducing environmental burden.

Here, it is preferable that when the polyolefin-based film has a laminated structure, a protrusion mountain average height (Spk) of the surface of the layer D measured with a three dimensional non-contact surface-roughness tester is 10 nm or more and 400 nm or less. By setting Spk to be 10 nm or more, appropriate smoothness can be imparted, and film transportability in a vapor deposition processing step and high water vapor barrier properties and oxygen barrier properties can be achieved. On the other hand, by setting Spk to be 400 nm or less, the formation of steep protrusions is suppressed, and thus, it is possible to reduce the deterioration of the water vapor barrier properties and the oxygen barrier properties due to defects such as pinholes and cracks of the layer D which are generated due to the protrusions. From the above viewpoint, the lower limit of Spk is preferably 20 nm, more preferably 30 nm, and still more preferably 40 nm. On the other hand, the upper limit of Spk is preferably 350 nm, more preferably 250 nm, still more preferably 150 nm, and particularly preferably 130 nm.

In order to control the Spk of the laminated body in the preferable range, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, to form a laminated structure, to control the cooling temperature at the time of cooling and solidifying the molten sheet at a low level (preferably 30°C or lower), and to perform biaxial stretching at an area stretch ratio of 36.0 times or more (preferably 40.0 times or more).

The thickness of the layer D in the laminated body of the present invention is preferably 200 nm or less from the viewpoint of recycling properties of reusing the laminated body as a resin or a film, improving barrier properties by making the laminated body difficult to crack, and obtaining visibility of contents when the laminated body is used as a packing material. From the above viewpoint, the thickness is more preferably 110 nm or less, still more preferably 50 nm or less, still more preferably 30 nm or less. The lower limit is not particularly limited, but is set to 1 nm from the viewpoint of exhibiting barrier properties.

In the laminated body of the present invention, a resin layer having a thickness of 1 um or less may be provided between the layer D and the surface of the polyolefin-based film by coating or the like. By providing such a resin layer, effects such as improving the adhesion between the layer D and the polyolefin-based film may be obtained. Here, from the viewpoint of production cost and recycling properties, a mode in which the resin layer is not provided (that is, a mode in which the layer D is directly laminated on the outermost surface of the polyolefin-based film) is preferable, and a mode in which the layer D is provided on the surface of the layer B of the polyolefin-based film is more preferable.

Examples of a method for forming the layer D on the polyolefin-based film of the present invention to form the laminated body include coating, vapor deposition, and lamination. The vapor deposition is particularly preferable because it is not dependent on humidity and an excellent gas barrier property can be expressed by a thin film. As the vapor deposition method, physical vapor deposition methods such as a vacuum vapor deposition method, an EB vapor deposition method, a sputtering method, and an ion plating method, and various chemical vapor deposition methods such as plasma CVD can be used. The vacuum vapor deposition method is particularly preferably used from the viewpoint of productivity.

From the viewpoint of suppressing the oxygen transmission rate of the laminated body of the present invention, for example, a topcoat layer containing an organic-inorganic mixture may be laminated on the surface of the layer D. Preferable examples of the topcoat layer include, as one thereof, a mixture of; an alkoxide containing a metal or a silicon atom and/or a polycondensate thereof; and a water-soluble polymer.

<Packing material and packed body>

Hereinafter, a packing material and a packed body of the present invention will be described. The packing material of the present invention includes at least one of the polyolefin-based film of the present invention and the laminated body of the present invention. The packing material of the present invention is excellent in structural stability against heat during vapor deposition, and has favorable water vapor barrier properties and oxygen barrier properties particularly when the transparent vapor-deposited layer is laminated, so that the packing material can be suitably used for packing those easily deteriorated by water vapor or oxygen.

The packed body of the present invention includes contents packed using the packing material of the present invention. The contents are not particularly limited. Since the packing material of the present invention is excellent in transparency, water vapor barrier properties, and oxygen barrier properties, the contents preferably require visibility from the outside, and are easily deteriorated by water vapor or oxygen. Note that the packed body of the present invention is obtained by covering the contents with the packing material of the present invention, and a mode thereof is not particularly limited. Examples thereof include a packed body obtained by processing the packing material of the present invention into a bag shape by heat sealing and putting contents into the bag. Specific examples of such a packed body include retort pouch food products.

<Manufacturing method>

The polyolefin-based film of the present invention can be obtained by biaxial stretching, a heat treatment, and a relaxation treatment using a raw material capable of giving the above-mentioned properties. As a method of the biaxial stretching, any of an inflation simultaneous biaxial stretching method, a tenter simultaneous biaxial stretching method, and a tenter sequential biaxial stretching method can be employed, and among them, a tenter sequential biaxial stretching method or a tenter simultaneous biaxial stretching method is preferably employed in terms of controlling the film formation stability, a crystalline/amorphous structure, and the surface properties, particularly the mechanical properties and thermal dimensional stability while increasing the stretch ratio of the present invention.

Next, a method for producing the polyolefin-based film of the present invention will be described as an example. First, a compound resin raw material obtained by pre-kneading a cycloolefin-based resin and a polypropylene-based resin is melt-extruded in a diluted state or as it is onto a support to obtain an unstretched film. This unstretched film is stretched in the machine direction and then stretched in the transverse direction to be sequentially biaxially stretched. Thereafter, the heat treatment and the relaxation treatment are performed to produce a biaxially oriented polyolefin-based film. Hereinafter, the present invention will be described more specifically, but the present invention is not necessarily interpreted to be limited thereto.

First, in the polyolefin-based film of the present invention, it is preferable to mix the cycloolefin-based resin, the polypropylene-based resin and an antioxidant to perform compounding in advance from the viewpoint of obtaining a film having a small temperature dependency of the storage modulus by improving the dispersion state of the cycloolefin-based resin and the polypropylene-based resin (A) to control $E'121/E'50$ to more than 0.25 and 0.99 or less and thereby suppressing film deformation due to heat particularly when the layer D is vapor-deposited on the film, and improving the water vapor barrier property and oxygen barrier property of the laminated body having the layer D laminated thereon. For the compounding, a short-screw extruder, a twin-screw extruder, or the like can be used, but from the viewpoint of obtaining a good dispersion state and high thermal stability, it is particularly preferable to use a twin-screw extruder.

The amount of the antioxidant is preferably 0.2 parts by mass or more, more preferably 0.3 parts by mass or more, still more preferably 0.4 parts by mass or more, with respect to 100 parts by mass of the compound resin component. The upper limit is 1.0 parts by mass.

Then, a resin raw material obtained by compounding a cycloolefin-based resin and a polypropylene-based resin is supplied to a single-screw extruder for the layer A, and a polypropylene-based resin or a polypropylene-based resin composition as a raw material for the layer B and a polypropylene-based resin or a polypropylene-based resin composition as a raw material for the layer C are supplied to the single-screw extruder for the layer B and the single-screw extruder for the layer C, respectively. Melt extrusion is performed from respective single-screw extruders of the layer A, the layer B, and the layer C set at an extrusion temperature of 220°C to 280°C inclusive, preferably 230°C to 270°C inclusive, and foreign matters and the like are removed by passing the materials through a filtration filter. Subsequently, these molten resins are joined together in a lamination apparatus such as a feed block so as to have a desired layer structure (for example, layer b/layer a/layer c, where the layer a is the layer A at an unstretched stage, the layer b is the layer B at an unstretched stage, and the layer c is the layer C at an unstretched stage). Thereafter, the obtained molten resin is extruded from a slit-shaped spinneret at a temperature of 200°C to 260°C inclusive.

Here, from the viewpoint that the film structure can be stabilized without being relaxed even at a high temperature by sufficiently melting the resin at the time of melt extrusion and preventing the cutting of the molecular chain due to shearing by screw rotation, it is preferable to adopt such temperature setting as to achieve a multistage temperature decrease in which the temperature before the filtration filter is high, the temperature after passing through the filtration filter is lower than that before the filter, and the spinneret temperature immediately before discharge is still lower. The oxygen concentration in the raw material supply hopper is preferably 1% or less (on a volume basis, the same applies hereinafter), more preferably 0.1% or less, and still more preferably 0.05% or less. By setting the oxygen concentration in the raw material supply hopper to 1% or less, oxidative deterioration of the polypropylene resin can be suppressed, and E'121/E'50 is more likely to be controlled to be in the preferable range of the present invention.

Next, the molten resin sheet extruded from the slit-shaped spinneret is cooled for solidification on a casting drum (cooling drum) with a surface temperature controlled to 10°C to 40°C inclusive to obtain an unstretched film. At this time, it is preferable to perform co-extrusion lamination such that the surface side on which the molten sheet extruded from the spinneret first comes into contact with the drum is the layer B because the roughness parameter of the layer D formed on the surface of the layer B can be easily controlled within a desired range.

As a method for bringing the molten sheet into close contact with the casting drum, any of an electrostatic application method, an adhesion method using the surface tension of water, an air knife method, a press roll method, an underwater casting method, an air chamber method, and the like may be used, or a plurality of methods may be combined. An air knife method capable of obtaining favorable film flatness and capable of controlling surface roughness is preferable. In addition, in the case of using the air knife method, it is preferable to appropriately adjust the position of the air knife such that the air flows to the downstream side of the film formation for keeping the film from vibrating.

From the viewpoint of smoothing the surface of the obtained polypropylene film for improving the thickness uniformity and adhesion of the layer D formed of the vapor-deposited film or the like, the surface temperature of the casting drum is preferably 10°C to 35°C inclusive, more preferably 10°C to 30°C inclusive, and particularly preferably 10°C to 25°C inclusive. By adopting such a temperature range, it is possible to increase the mesomorphic phase fraction of a surface layer portion particularly on the drum surface side (surface side to be the layer B after stretching) of the unstretched film, so that the unstretched film can have a mesomorphic phase structure.

The mesomorphic phase is an intermediate phase between a crystal and an amorphous phase, and is specifically produced in solidification at a very high cooling rate from a molten state. It is generally known that spherulites grow when a polypropylene is cooled and solidified into crystals. It is believed that when an unstretched film having the spherulites is stretched, a difference in stretching stress is produced between the crystal portion and the amorphous portion inside the spherulites and between the spherulites, which produces local stretching unevenness, leading to thickness unevenness and structure unevenness. On the other hand, since the mesomorphic phase does not take a spherulite form, stretching unevenness does not occur, and stretching uniformity is enhanced, so that thickness uniformity becomes high, and surface roughness is small and easily becomes uniform when the mesomorphic phase is formed into a film.

Then, the unstretched film is biaxially stretched to be biaxially oriented. More specifically, the unstretched film is maintained at a temperature of preferably 100°C to 170°C inclusive, more preferably 120°C to 165°C inclusive, subjected to stretching in the machine direction to preferably 2.0 to 12 times inclusive, more preferably 3.0 to 11 times inclusive, still more preferably 4.0 to 10 times inclusive, particularly preferably 4.5 to 10 times inclusive, and most preferably 5.0 to 9.0 times inclusive, and then cooled to room temperature.

Next, the film is guided to a tenter while both ends of the film in the transverse direction uniaxially stretched in the machine direction are held by a clip. Here, in the present invention, the temperature of the preheating step immediately before stretching in the transverse direction is set to be in a range from the stretching temperature in the transverse direction +5°C to the stretching temperature in the transverse direction +15°C inclusive, whereby a fibril structure highly oriented in the machine direction by uniaxial stretching can be further strengthened, and therefore the temperature dependency of the storage modulus of the film can be reduced, and E'121/E'50 can be easily controlled to be in the above-mentioned preferable range. In addition, it is preferable from the viewpoint of improving the thermal dimensional stability that a molecular chain having insufficient orientation is stabilized by high temperature preheating after uniaxial stretching. From the above viewpoint, the upper limit of the temperature in the preheating step immediately before stretching in the transverse direction is preferably the stretching temperature in the transverse direction +12°C, and more preferably the stretching temperature in the transverse direction +10°C.

Next, the film is stretched in the transverse direction while both end portions in the transverse direction of the film are held by clips, and from the viewpoint of controlling E'121/E'50 to be in the above-mentioned preferable range, the stretching temperature in the transverse direction is preferably 150°C to 175°C inclusive, and more preferably 155°C to 175°C inclusive.

From the viewpoint of reducing the temperature dependency of the storage modulus of the film and easily controlling E'121/E'50 to be in the above-mentioned preferable range, the stretch ratio in the transverse direction is preferably 6.0 to 20.0 times inclusive, more preferably 8.1 to 17.0 times inclusive, and still more preferably 9.1 to 15.0 times inclusive. A stretch ratio of 6.0 times or more in the transverse direction alleviates the orientation contribution of the fibril structure highly oriented in the machine direction by uniaxial stretching, and therefore, the film deformation due to heat particularly when the layer D is vapor-deposited on the film is reduced, and the water vapor barrier property and the oxygen barrier property of the laminated body in which the layer D is laminated are maintained. Increasing the stretch ratio in the transverse direction rather than in the machine direction is preferable because orientation in the transverse direction is imparted while maintaining a highly orientated state in the machine direction, so that in-plane molecular chain tension is increased, thereby particularly obtaining an effect of reducing the temperature dependency of the storage modulus.

Herein, the area stretch ratio is preferably 36.0 times or more. By setting the area stretch ratio to 36.0 times or more, the molecular chain tension in the film plane is increased and the domain structure becomes small or thin, and therefore, the temperature dependency of the storage modulus when a film is formed can be reduced, the thermal dimensional stability can be enhanced, and the elongation at break can be enhanced. As a result, the obtained film is suppressed from being deformed by heat particularly when the layer D is vapor-deposited on the film, and the laminated body in which the layer D is laminated has excellent water vapor barrier properties and oxygen barrier properties. In the present invention, the area stretch ratio is obtained by multiplying the stretch ratio in the machine direction by the stretch ratio in the transverse direction. From the above viewpoint, the area stretch ratio is more preferably 38.0 times or more, still more preferably 40.0 times or more, and particularly preferably 44.0 times or more. The upper limit of the area stretch ratio is not particularly limited but is 90.0 times in the case of sequential biaxial stretching and 150 times in the case of simultaneous biaxial stretching from the viewpoint of feasibility.

The important point of the polyolefin-based film of the present invention is to reduce the temperature dependency of the storage modulus and the thermal shrinkage rate in the main orientation axis direction at 150°C while maintaining a high area stretch ratio, and to increase the tensile elongation in the direction orthogonal to the main orientation axis. That is, in the present invention, it is preferable to increase the dispersibility of the cycloolefin-based resin domains dispersed in the polypropylene-based resin, and to apply a preheating temperature higher than the stretching temperature during biaxial stretching and stretching in the transverse direction.

In the production of the polypropylene film of the present invention, in the subsequent heat treatment and relaxation treatment step, it is preferable to perform the heat treatment at 145°C or more and 170°C or less while applying a relaxation of 2% to 20% inclusive in the transverse direction with the tension in the transverse direction maintained by holding both ends with clips from the viewpoint of removing residual film distortion and improving thermal dimensional stability. By such a treatment, film deformation due to heat particularly when the layer D is vapor-deposited on the film can be suppressed, and the water vapor barrier property and the oxygen barrier property of the laminated body in which the layer D is laminated can be improved. From the above viewpoint, the lower limit of the heat treatment temperature is preferably 150°C, more preferably 155°C, and still more preferably 160°C. In the relaxation treatment, from the viewpoint of enhancing the structural stability of the film against heat, the lower limit of the relaxation ratio is preferably 5%, more preferably 8%, still more preferably 11%, while the upper limit is preferably 18%, more preferably 17%.

After the heat treatment and relaxation treatment step, the film is guided to the outside of the tenter, the clips at the opposite ends in the transverse direction of the film are then released in a room temperature atmosphere, and the opposite edges in the transverse direction of the film are slit in a winder step.

Thereafter, for the purpose of increasing the peel strength of the layer D, the surface on which the layer (layer D) containing a metal and an inorganic compound in a total amount of more than 50% by mass and 100% by mass or less is to be laminated (typically, the surface on the side in contact with the cast drum) is preferably subjected to an in-line surface modification treatment. Examples of the in-line surface modification treatment include a corona discharge treatment, or a plasma treatment, an ion beam treatment, or the like, in the air or in an atmosphere gas of oxygen, nitrogen, hydrogen, argon, a carbon dioxide gas, a silane gas, or a mixture thereof.

In particular, as for the corona discharge treatment, it is effective to perform the treatment in an atmosphere gas with an oxygen concentration of 10% or less, preferably 5% or less, more preferably 1% or less, and as a specific mode of the atmosphere gas with an oxygen concentration of 1% or less, it is effective to employ a nitrogen gas, a carbon dioxide gas, or a mixture thereof, particularly a mixture of a nitrogen gas and a carbon dioxide gas. In addition, a method of combining the above-described corona discharge treatment in the atmosphere gas with the plasma treatment or the ion beam treatment is also effective. Performing the treatment in such an atmosphere allows a hydrophilic functional group to be efficiently introduced while inhibiting the generation of a low-molecular-weight product with polypropylene molecular chain scission at the film surface, thus facilitating the increase of the peel strength of the layer D from the polyolefin-based film. The film thus obtained can be wound into a roll form to obtain the polyolefin-based film according to the present invention.

In order to obtain the polyolefin-based film of the present invention, specific examples of the intended production conditions are as follows. Although it is preferable to satisfy all of these production conditions, all of them may not necessarily be included but may be appropriately combined. For example, simultaneous biaxial stretching may be employed instead of "in sequential biaxial stretching, the preheating temperature before stretching in the transverse direction is the stretching temperature in the transverse direction +5°C to the stretching temperature in the transverse direction +15°C inclusive".

· The cycloolefin-based resin and the polypropylene-based resin are pre-compounded.
· The extrusion condition is as follows: the temperature before passing through the filtration filter is high; the temperature after passing through the filtration filter is lower than the temperature before passing through the filtration filter; and the spinneret temperature immediately before discharge is further lowered (multistage temperature decrease).
· The oxygen concentration in the raw material supply hopper is set to 1% or less.
· The resin raw material subjected to the pre-compounding is used for the layer A, and the layer A is used as an inner layer to form a laminated structure.
· The area stretch ratio of biaxial stretching is 36.0 times or more.
· In sequential biaxial stretching, the preheating temperature before stretching in the transverse direction is the stretching temperature in the transverse direction +5°C to the stretching temperature in the transverse direction +15°C inclusive.
· The biaxially stretched film is subjected to heat treatment at 145°C or more and 170°C or less while being relaxed by 2% to 20% inclusive in the transverse direction.

<Metallized film, film capacitor using metallized film, and manufacturing method thereof>

The metallized film of the present invention includes a metal membrane on at least one surface of the polyolefin-based film of the present invention. This metallized film can be obtained by providing a metal membrane on at least one surface of the polypropylene film according to the present invention.
In the present invention, the method for attaching a metal membrane is not particularly limited, and for example, a method is preferably used in which aluminum or an alloy of aluminum and zinc is vapor-deposited on at least one surface of a polyolefin-based film to provide a metal membrane such as the vapor-deposited film serving as an internal electrode of a film capacitor. At this time, other metal components such as nickel, copper, gold, silver, and chromium can be vapor-deposited simultaneously or sequentially with aluminum. A protective layer can also be provided on the vapor-deposited film with oil or the like. When the surface roughness of the polyolefin-based film is different between the front and back surfaces, it is preferable to provide a metal membrane on the surface side having a smooth roughness to form a metallized film from the viewpoint of improving the withstand voltage properties.
In the present invention, if necessary, after the metal membrane is formed, the metallized film can be subjected to an annealing treatment or a heat treatment at a specific temperature. For insulation or other purposes, at least one surface of the metallized film may be coated with a resin such as polyphenylene oxide.
The film capacitor of the present invention is formed using the metallized film of the present invention. That is, the film capacitor of the present invention includes the metallized film of the present invention.
For example, the film capacitor of the present invention can be obtained by laminating or winding the metallized film of the present invention described above by various methods. A preferable method for producing a wound film capacitor is as follows.
Aluminum is vapor-deposited on one surface of the polyolefin-based film under a reduced pressure. At that time, vapor deposition is performed in a stripe shape having a margin portion running in the machine direction. Next, slits are made with a blade at the center of each vapor deposition portion and the center of each margin portion on the surface to produce a tape-shaped winding reel having a margin on one side of the surface. Two tape-shaped winding reels respectively having a left margin and a right margin are overlapped and wound such that the vapor deposition portion protrudes from the margin portion in the transverse direction to obtain a wound body.
When both surfaces of the film are subjected to vapor deposition, aluminum is vapor-deposited in a stripe pattern having margins running in the machine direction on one surface, and aluminum is vapor-deposited on the other surface in a stripe pattern so that margins in the machine direction are positioned at the center of the vapor deposition portion on the back surface. Next, slits are made with a blade at the center of each margin portion on the front and back surfaces to produce a tape-shaped winding reel having a margin on one side (for example, if there is a margin on the front right side, a margin is on the left side on the back side) on both surfaces. Two sheets including one obtained reel and one undeposited laminated film are overlapped and wound so that the metallized film protrudes from the laminated film in the transverse direction to obtain a wound body.
Examples of the method for obtaining the film capacitor of the present invention from the metal layer laminated film of the present invention include a method of forming the wound film capacitor by removing a core material from the wound body produced as described above, pressing the core material, thermally spraying metal plating on both end surfaces of the core material to form external electrodes, and welding lead wires to the metal plating. Film capacitors are used in a wide variety of applications, such as power control units for electric vehicles including electric cars, hybrid cars, and fuel cell cars, and electric aircrafts including drones; railroad vehicles; solar power generation and wind power generation; and general household appliances. The film capacitor of the present invention can also be suitably used in these applications.

Hereinafter, a power control unit, an electric vehicle, and an electric aircraft according to the present invention will be described. The power control unit according to the present invention includes the film capacitor according to the present invention. The power control unit is a system that manages power in an electric vehicle, an electric aircraft, or the like that has a mechanism driven by electric power. Installing the film capacitor according to the present invention in the power control unit allows the power control unit itself be reduced in size, improved in heat resistance and increased in efficiency, and as a result to improve the fuel efficiency.

The electric vehicle according to the present invention includes the power control unit according to the present invention. In this regard, the electric vehicle refers to an automobile that has a mechanism driven by electric power, such as an electric automobile, a hybrid automobile, and a fuel cell automobile. As described above, the power control unit according to the present invention can be reduced in size and is also excellent in heat resistance and efficiency, and thus, the electric vehicle including the power control unit according to the present invention leads to an improvement in fuel efficiency and the like.

EXAMPLES

Hereinafter, the present invention will be described in more detail with reference to examples, but the present invention is not limited to the following modes. It is to be noted that respective items were evaluated by the following method.

<Methods for measuring characteristic values, methods for evaluating effects>

Methods for measuring characteristic values and methods for evaluating effects in the present invention are as follows.

(1) Specifying main orientation axis direction

The polyolefin-based film was prepared and cut into a rectangle of 150 mm in length × 10 mm in width with the machine direction directed upward to obtain a sample <1>. In this case, the direction in which the long side of the rectangular sample <1> was directed was defined as 0°. Next, a sample <2> in the same size was collected such that the long side direction was directed in a direction rotated rightward by 15° from the 0° direction. Subsequently, samples <3> to <12> were collected in the same manner by similarly rotating the long side direction of the rectangular sample by 15° each. Next, each of the rectangular samples was set in a tensile tester ("Tensilon" (registered trademark) UCT-100 manufactured by ORIENTEC CORPORATION) at an initial chuck-to-chuck distance of 20 mm such that the long side direction is a tensile direction, and a tensile test was performed at a tensile speed of 300 mm/min under an atmosphere at 23°C. In this case, the maximum load until a sample breakage was read, and the value obtained by dividing the maximum load by the cross-sectional area (film thickness × width) of the sample before the test was calculated as the stress of the maximum point strength. The same measurement was performed 5 times for each sample to obtain the average value of the stresses of the maximum point strengths. The long side direction of the sample with the largest average value was defined as the main orientation axis direction of the polyolefin-based film, and the direction orthogonal thereto in the plane of the film was defined as the direction orthogonal to the main orientation axis of the polyolefin-based film.

(2) Film thickness

The thickness of the polyolefin-based film was measured at 10 arbitrary positions in an atmosphere of 23°C and 65% RH using a contact-type electronic micrometer (K-312A type) manufactured by ANRITSU CORPORATION. The arithmetic average value of the thicknesses at the 10 points was regarded as the thickness (unit: um) of the film.

(3) Ratio of storage modulus in main orientation axis direction E'121/E'50

Under the following apparatus and conditions, a rectangular polyolefin-based film (width (short side) 10 mm × length (long side) 20 mm) cut out with the main orientation axis direction being a long side direction was attached to an apparatus chuck portion under an atmosphere of 23°C and set in a furnace. The atmosphere in the furnace in which the film was set was cooled with liquid nitrogen, the temperature was raised from -100°C to 180°C to perform measurement, a viscoelasticity-temperature curve was drawn by a dynamic viscoelasticity measurement, and the storage modulus (E'50) at 50°C was read. The number of measurement tests was n = 3, and the average value of the storage modulus (E'50) was calculated. Similarly, the number of measurement tests was set to n = 3, the storage modulus (E'121) at 121°C was read from the viscoelasticity-temperature curve, and the average value thereof was obtained. The average value of E'121 obtained was divided by the average value of E'50 obtained to obtain E'121/E'50 (unit: dimensionless).

<Apparatus and conditions>

Apparatus: EXSTAR DMS 6100 (manufactured by Seiko Instruments Inc.)
Test mode: Tensile mode
Distance between chucks: 20 mm
Frequency: 10 Hz
Strain amplitude: 20.0 um
Gain: 1.5
Initial value of force amplitude: 490 mN
Temperature range: -100°C to 180°C inclusive
Heating rate: 5°C/min
Measurement atmosphere: Atmosphere
Measured thickness: The film thickness of the above (2) was used.

(4) Thermal shrinkage rate (%) in main orientation axis direction at 150°C

The polyolefin-based film was cut in the main orientation axis direction into 5 samples each having a width of 10 mm and a length of 150 mm (measurement direction), and each sample was marked at a position of 5 mm from each end to mark a sample length of 100 mm (l0). Then, each test piece was sandwiched between paper, heated in an oven maintained at 150°C for 10 minutes in a state of being horizontally held, and then taken out and cooled at 23°C. The dimension (l1) was measured and the thermal shrinkage rate was determined by the following formula. The average of the thermal shrinkage rates of 5 test pieces was taken as the thermal shrinkage rate in each direction.

$$\text{Thermal shrinkage rate} = \{(l0 - l1)/l0\} \times 100(\%).$$

(5) Tensile elongation (%) in direction orthogonal to main orientation axis

A rectangular polyolefin-based film or laminated body (width (short side) 10 mm × length (long side) 150 mm) cut out along a film sample length direction (the direction orthogonal to the main orientation axis determined as described above) as the long side direction was used as a measurement sample. Next, the sample was set in a sample tensile tester ("Tensilon" (registered trademark) UCT-100 manufactured by ORIENTEC CORPORATION) at an initial chuck-to-chuck distance of 20 mm, and a tensile test of the film was performed under an environment of 23°C at a tensile speed of 300 mm/min. In this case, the position of the sample in the long side direction was adjusted such that the center of the sample was located in the vicinity of the center between the chucks. The elongation (unit: %) at the time when the sample was broken was obtained by the measurement. The measurement was performed five times, and the tensile elongation in the direction orthogonal to the main orientation axis of the polyolefin-based film or laminated body was determined as the average value of the elongations at the breaking time when the sample was broken.

(6) Ratio of tan$\delta$ in main orientation axis direction tan$\delta$50/tan$\delta$121

A viscoelasticity-temperature curve was drawn by the dynamic viscoelasticity method using the same apparatus and conditions as in the above (3), and the storage modulus (E'50) at 50°C and the loss modulus (E"50) at 50°C were read. The number of measurement tests was n = 3, the average value of the storage modulus (E'50) and the average value of the loss modulus (E"50) were each calculated, and the loss tangent (tan$\delta$50) at 50°C in the film main orientation axis direction was calculated from the following formula.

$$\text{Formula; } \tan\delta 50 = E''50/E'50$$

Similarly, the number of measurement tests was n = 3, the storage modulus (E'121) at 121°C and the loss modulus (E"121) at 121°C were read from the viscoelasticity-temperature curve, the average values thereof were calculated, and the loss tangent (tanδ121) at 121°C in the film main orientation axis direction was calculated from the following formula.

$$\text{Formula; } \tan\delta121 = E''121/E'121$$

The value of tan650 obtained was divided by the value of tanδ121 obtained to obtain tanδ50/tanδ121 (unit: dimensionless).

(7) Glossiness

Using a digital variable angle gloss meter UGV-5D manufactured by Suga Test Instruments Co., Ltd. in accordance with JIS K-7105 (1981), the film surface on the side in contact with the casting drum was measured under conditions of an incident angle of 60° and a light receiving angle of 60°. The average of data at 5 points was taken as the glossiness (%).

(8) Melting point (Tm) of raw material resin composition and resin composition of each layer of film

As the sample, a resin composition of raw materials used for the polyolefin-based resin film of the present invention (in a case where a plurality of raw materials are mixed, a resin composition obtained by mixing these raw materials at a predetermined ratio) and a polyolefin-based film in which each layer was cut were used. With the use of a differential scanning calorimeter (EXSTAR DSC6220 manufactured by Seiko Instruments Inc.), 3 mg of a polyolefin-based resin sample was heated from 30°C to 260°C under the condition of 20°C/min in a nitrogen atmosphere. Subsequently, the sample was held at 260°C for 5 minutes, and then cooled down to 30°C under the condition of 20°C/min. The sample was further held at 30°C for 5 minutes, and then heated from 30°C to 260°C under the condition of 20°C/min. The peak temperature of the endothermic curve obtained at the time of heating the sample was defined as the melting point of the raw material resin composition and each layer of film. In the present example, the (Tm) was calculated from the average value obtained by measurement with n = 3. There are the case where two or more peak temperatures are observed within the range of more than 130°C and 260°C or less and the case where a peak temperature that can be observed on a multistep DSC chart referred to as a shoulder (observed in the case of a chart with two or more peaks overlapped with each other) appears, but in the present example, the temperature of a peak with the largest absolute value of the vertical axis heat flow (unit: mW) on a DSC chart was regarded as the melting point (Tm) (°C).

(9) Number of domains (number/2 $\mu$m$^2$) of cycloolefin resin passing through pair of sides parallel to thickness direction in rectangle measuring 1 um $\times$ 2um in layer A

The layer A of the polyolefin-based film was cut along a plane parallel to the main orientation axis direction and the thickness direction using a microtome method to prepare a polypropylene film piece having a cut surface. After staining the section with RuO4, the stained surface was cut and an ultra-thin slice with the section X was collected. The section of the collected ultra-thin slice was observed using a transmission electron microscope (TEM) under the following conditions. At this time, the cycloolefin-based resin is stained blacker than the polypropylene-based resin.

· Apparatus: TEM HT7700 manufactured by Hitachi, Ltd.
· Acceleration voltage: 100 kV
· Observation magnification: 2,000 times

A rectangle of 2 $\mu$m$^2$ surrounded by four sides around in which a rectangle that had a pair of sides measuring 1 um in the thickness direction and measuring 2 um in the direction orthogonal to the thickness direction was defined was drawn on the image collected in the observation, and the number of domains of the cycloolefin-based resin passing through the pair of sides parallel to the thickness direction in the rectangle was counted. The average value of the numbers of domains obtained by performing the same measurement a total of 10 times while changing the position of the rectangle in the image was calculated, rounded to one decimal place, and then taken as the number of domains (number/2 $\mu$m$^2$) of the cycloolefin resin passing through the pair of sides parallel to the thickness direction in the layer A. When the rectangle that had the pair of sides measuring 1 $\mu$m in the thickness direction and measuring 2 um in the direction orthogonal to the thickness direction was defined in the section X, the base of the rectangle was set in the sea portion, and when a domain was located on a side facing the base, the domain was considered to be absent and was not counted as the domains. In addition, a domain having a constricted part was regarded as a cycloolefin-based resin domain stained deeper than the polypropylene-based resin portion serving as the sea portion and was treated as a connected domain.

(10) Ten point region height (S10z) of surfaces measured by three dimensional non-contact surface profile measurement

The measurement of the S10z value was performed with the use of a scanning white-light interference microscope VS1540 from Hitachi High-Tech Science Corporation, which is a three-dimensional non-contact surface profile measuring instrument. In addition, in analysis, with the use of attached analysis software, the undulation component was removed from a shot image by polynomial quartic approximation surface correction, then, the image was processed with a median ($3 \times 3$) filter, and then subjected to interpolation processing (processing of compensating for pixels from which height data failed to be acquired, with height data calculated from surrounding pixels). The measurement conditions were as follows. When the layer B was present on both surfaces, the measurement was performed on both surfaces, and the lower value was adopted. Manufacturer: Hitachi High-Tech Science Corporation Apparatus name: Scanning white interference microscope VS1540

· Measurement conditions:

Objective lens $10\times$
Lens barrel $1\times$
Zoom lens $1\times$
Wavelength filter 530 nm white

· Measurement mode: Wave
· Measurement software: VS-Measure Version 10.0.4.0
· Analysis software: VS-Viewer Version 10.0.3.0
· Analysis condition: S-Filter = 5 um
· Measurement area: $0.561 \times 0.561$ [mm$^2$].

(11) Heat sealability

A stretched PET film of 12 um in thickness was stacked on the layer C surface of the film (the surface opposite the deposition side when there is no layer C), and heat-sealed using a flat heat sealer under the following conditions to produce a bonded product. The interface between the polyolefin-based film according to the present invention and the stretched PET film was subjected to a T-peel test with the use of "Tensilon" (registered trademark) manufactured by ORIENTEC CORPORATION to measure the heat seal strength. Further, the bonded product in the peeling test was sampled in a strip shape of 20 mm in width $\times$ 150 mm in length, and the heat seal strength was measured at a tensile speed of 300 mm/min. This measurement was performed three times, and the average value of the obtained values was obtained and regarded as the heat seal strength (N/25.4 mm). It was determined that the heat sealability was determined as pass (A) when the heat-seal strength could achieve 2 N/25.4 mm or more, whereas it was determined that the heat sealability was determined as failure (B) when the heat-seal strength was less than 2 N/25.4 mm.

<Heat sealing condition>

· Pressing pressure: 0.4 N/mm$^2$
· Pressing time: 1 sec
· Heater temperature: 120°C.

(12) Water vapor barrier properties after Al vapor deposition or after AlOx vapor deposition

<Al vapor deposition method>

A film roll was set in a vacuum vapor deposition apparatus equipped with a film traveling device, and brought into a state in which the pressure is highly reduced to $1.00 \times 10^{-2}$ Pa. Thereafter, on a cooling metal drum at 20°C, the film was caused to travel while aluminum metal was heated and evaporated to form a vapor-deposited thin-film layer on the layer B. At this time, the vapor-deposited film was controlled to have a thickness of 100 nm. After the vapor deposition, the inside of the vacuum vapor deposition apparatus was returned to normal pressure, the wound film was rewound, and aged at a temperature of 40°C for 2 days to obtain a laminated body in which the vapor-deposited layer of Al (aluminum) was laminated on the film.

<AlOx vapor deposition method>

A film roll was set in a vacuum vapor deposition apparatus equipped with a film traveling device, and brought into a state in which the pressure is highly reduced to $1.00 \times 10^{-2}$ Pa. Thereafter, on a cooling metal drum at 20°C, the film was caused to travel while AlOx was reacted and evaporated while introducing an oxygen gas to form a vapor-deposited layer on the previously corona discharge treated surface. At this time, the vapor-deposited layer was controlled to have a thickness of 20 nm. After the vapor deposition, the inside of the vacuum vapor deposition apparatus was returned to normal pressure, the wound film was rewound, and aged at a temperature of 40°C for 2 days to obtain a laminated body in which the vapor-deposited layer of AlOx (alumina) was laminated on the film.

<Method for evaluating water vapor barrier properties>

The laminated body obtained through the Al vapor deposition or the AlOx vapor deposition was measured under the conditions of a temperature of 40°C and a humidity of 90% RH using a water vapor transmission rate measuring apparatus "PERMATRAN-W" (registered trademark) 3/30 manufactured by MOCON/Modern Controls, Inc. The measurement was performed 5 times per sample, and the average value of the obtained values was calculated and taken as the water vapor transmission rate of the film (unit: $g/m^2/day$). From the obtained water vapor transmission rate, the water vapor barrier property of the laminated body was determined according to the following criteria. B or more was regarded as a good water vapor barrier property, and C was regarded as a practically acceptable level.

S: 0.3 $g/m^2/day$ or less.
A: More than 0.3 $g/m^2/day$ and 0.5 $g/m^2/day$ or less.
B: More than 0.5 $g/m^2/day$ and 1.0 $g/m^2/day$ or less.
C: More than 1.0 $g/m^2/day$ and 2.0 $g/m^2/day$ or less.
D: More than 2.0 $g/m^2/day$, or the film was broken during vapor deposition processing.

(13) Oxygen barrier properties after Al vapor deposition or after AlOx vapor deposition

The laminated body in which the Al vapor-deposited layer or the AlOx vapor-deposited layer was laminated was obtained by the method described in (12). For each laminated body, the oxygen transmission rate was measured under the conditions of a temperature of 23°C and a humidity of 0% RH using an oxygen transmission rate measuring apparatus "OX-TRAN" (registered trademark) 2/20 manufactured by MOCON/Modern Controls, Inc. The measurement was performed 5 times per sample, and the average value of the obtained values was calculated and taken as the oxygen transmission rate of the film (unit: $cc/m^2/day$). From the obtained oxygen transmission rate, the oxygen barrier property of the laminated body was determined according to the following criteria. B or more was regarded as a good oxygen barrier property, and C was regarded as a practically acceptable level.

S: 1.5 $cc/m^2/day$ or less.
A: More than 1.5 $cc/m^2/day$ and 2.0 $cc/m^2/day$ or less.
B: More than 2.0 $cc/m^2/day$ and 10 $cc/m^2/day$ or less.
C: More than 10 $cc/m^2/day$ and 100 $cc/m^2/day$ or less.
D: More than 100 $cc/m^2/day$, or the film was broken during vapor deposition processing.

(14) Thickness of layer D

The thickness of the layer D constituting the laminated body according to the present invention was measured by cross-sectional observation with a transmission electron microscope (TEM). A sample for the cross-sectional observation was produced by an FIB method with the use of Microsampling System (FB-2000A, manufactured by Hitachi, Ltd.) (specifically, according to the method described in "Kobunshi Hyomen Kakogaku" (Polymer Surface Processing)", Satoru Iwamori, pp. 118-119). Subsequently, a cross section of the sample for observation was observed with a TEM (H-9000UHRII, manufactured by Hitachi, Ltd.) at an accelerating voltage of 300 kV, and the thickness of the layer D was checked at arbitrary 10 points using a length measuring function of the transmission electron microscope. The arithmetic average value of the thicknesses was regarded as the thickness (unit: nm) of the layer D.

(15) Protrusion mountain average height (Spk) of surface of layer D

The measurement of the Spk value was performed with the use of a scanning white-light interference microscope VS1540 from Hitachi High-Tech Science Corporation, which is a three-dimensional non-contact surface profile measuring instrument. In addition, in analysis, with the use of attached analysis software, the undulation component was removed from a shot image by polynomial quartic approximation surface correction, then, the image was processed with a median (3 × 3) filter, and then subjected to interpolation processing (processing of compensating for pixels from which height data failed to be acquired, with height data calculated from surrounding pixels). The measurement conditions were as follows.

    Manufacturer: Hitachi High-Tech Science Corporation
    Apparatus name: Scanning white interference microscope VS1540
    · Measurement conditions:

        Objective lens 10×
        Lens barrel 1×
        Zoom lens 1×
        Wavelength filter 530 nm white

    · Measurement mode: Wave
    · Measurement software: VS-Measure Version 10.0.4.0
    · Analysis software: VS-Viewer Version 10.0.3.0
    · Measurement area: 0.561 × 0.561 [mm$^2$].

(16) Evaluation of film capacitor properties (withstand voltage and reliability at 135°C)

A vapor deposition film A, in which aluminum was vapor-deposited on one surface (the surface having the higher wet tension when the wet tension was different between the front and back surfaces) of the film in a vapor deposition pattern having a film resistance of 10 Ω/sq and what is called a T-shaped margin (machine direction pitch (period) of 17 mm and fuse width of 0.5 mm due to masking oil) in which a margin portion was provided in a direction perpendicular to the machine direction using a vacuum vapor deposition machine manufactured by ULVAC, Inc., and a vapor deposition film B which is not subjected to a vapor deposition pattern with T-shaped margins, were prepared respectively. The vapor deposition films A and B were respectively slit to obtain vapor deposition reels A and B having a film width of 50 mm (an end margin width of 2 mm). Then, a capacitor element was wound up by an element winding machine (KAW-4NHB) manufactured by KAIDO MANUFACTURING CO., LTD. so that the element capacitance after the capacitor element was finished was 10 μF with the vapor deposition reels A and B alternately overlapped, and was subjected to metal plating, and then subjected to a heat treatment at a temperature of 128°C for 12 hours under a reduced pressure, and a lead wire was attached to finish the capacitor element. Using the obtained 10 capacitor elements, what is called a step-up test was performed in which the operation of applying a voltage of 150 VDC to the capacitor elements at a high temperature of 135°C and gradually increasing the applied voltage stepwise at 50 VDC/1 minute after a lapse of 10 minutes at the voltage was repeated.

<Evaluation of withstand voltage>

In the step-up test, the change in electrostatic capacitance was measured and plotted on the graph, the voltage at which the capacitance reached 70% of the initial value was divided by the thickness of the film (the above-mentioned (1)) to determine the withstand voltage, and the average value of 10 capacitor elements was calculated and evaluated according to the following criteria. A means that the element can be used, and B means inferiority in practical performance.

    A: 320 V/um or more
    B: Less than 320 V/μm.

<Evaluation of reliability>

After increasing the voltage until the electrostatic capacitance decreased to 12% or less with respect to the initial value, 1 of the 10 capacitor elements to which the highest withstand voltage was applied was disassembled to examine the state of breakdown, and the reliability was evaluated as follows. A means that the element can be used, and B means inferiority in practical performance.

    A: There was no change in element shape, and penetrating destruction of one or more and ten or less layers of the film was observed. Alternatively, no change in element shape and no penetrating destruction were observed.
    B: A change in element shape was observed, or penetrating destruction of more than 10 layers was observed.

[Resin and the like]

In the production of the polyolefin-based film in each of examples and comparative examples, the following resins and the like were used.

(Polypropylene-based resin for layer A)

A1: Homopolypropylene resin ("F133A" (meso-pentad fraction: 0.973, melting point: 165°C, MFR: 3.0 g/10 min) manufactured by Prime Polymer Co., Ltd.)
A2: Homopolypropylene resin ("F113G" (meso-pentad fraction: 0.940, melting point: 162°C, MFR: 2.9 g/10 min) manufactured by Prime Polymer Co., Ltd.)

(Polypropylene-based resin for layer B)

B1: Homopolypropylene resin ("F113G" (meso-pentad fraction: 0.940, melting point: 162°C, MFR: 2.9 g/10 min) manufactured by Prime Polymer Co., Ltd.)
B2: Homopolypropylene resin ("F133A" (meso-pentad fraction: 0.973, melting point: 165°C, MFR: 3.0 g/10 min) manufactured by Prime Polymer Co., Ltd.)

(Polypropylene-based resin for layer C)

C1: Ethylene-propylene random copolymer ("WFW4M" manufactured by Japan Polypropylene Corporation, melting point: 135°C, MFR: 7.0 g/min).

<Components other than polypropylene-based resin>

Cycloolefin-based resin:

COC1: "TOPAS" (registered trademark) 6013F-04 (a resin (COC) obtained by copolymerizing ethylene and norbornene, having a glass transition temperature of 138°C) manufactured by Polyplastics Co., Ltd.
COC2: "APEL" (registered trademark) 5014CL (a resin (COC) obtained by copolymerizing ethylene and a norbornadiene derivative and has a glass transition temperature of 136°C) manufactured by Mitsui Chemicals, Inc.

Antioxidant:

"IRGANOX" (registered trademark) 1010 manufactured by Ciba Specialty Chemicals.

<Thermoplastic resin that is incompatible with polypropylene-based resin>

Polymethylpentene-based resin (PMP):

"TPX" (registered trademark) (RT31, melting point 232°C, MFR: 9 g/10 min at 260°C) manufactured by Mitsui Chemicals, Inc.

<Masterbatch for layer A>

Polyolefin-based resin raw material (AM1):

The respective components were mixed so that the amount of the polypropylene resin (A1) was 69.5 parts by mass, the amount of the cycloolefin-based resin (COC1) was 30 parts by mass, and the amount of the antioxidant was 0.5 parts by mass, the mixture was kneaded and extruded with a twin-screw extruder set at 260°C, and then the strands were cooled with water and made into chips to provide a polyolefin-based resin raw material (AM1).

Polyolefin-based resin raw material (AM2):

The respective components were mixed so that the amount of the polypropylene resin (A2) was 69.5 parts by mass, the amount of the cycloolefin-based resin (COC1) was 30 parts by mass, and the amount of the antioxidant was 0.5 parts by mass, the mixture was kneaded and extruded with a twin-screw extruder set at 260°C, and then the strands were cooled with water and made into chips to provide a polyolefin-based resin raw material (AM2).

Polyolefin-based resin raw material (AM3):

The respective components were mixed so that the amount of the polypropylene resin (A1) was 69.5 parts by mass, the amount of the cycloolefin-based resin (COC2) was 30 parts by mass, and the amount of the antioxidant was 0.5 parts by mass, the mixture was kneaded and extruded with a twin-screw extruder set at 260°C, and then the strands were cooled with water and made into chips to provide a polyolefin-based resin raw material (AM3).

<Masterbatch for layer B>

Polyolefin-based resin raw material (BM1)

The respective components were mixed so that the amount of the polypropylene resin (B1) was 69.5 parts by mass, the amount of the polymethylpentene-based resin (PMP) was 30 parts by mass, and the amount of the antioxidant was 0.5 parts by mass, the mixture was kneaded and extruded with a twin-screw extruder set at 260°C, and then the strands were cooled with water and made into chips to provide a polyolefin-based resin raw material (BM1).

(Example 1)

The respective components were mixed so that the amount of the polyolefin-based resin raw material (AM1) was 32 parts by mass, the amount of the polypropylene resin (A1) was 67.6 parts by mass, and the amount of the antioxidant was 0.4 parts by mass, the mixture was supplied to a single-screw melt extruder for the layer A, a polypropylene resin B1 was supplied to a single-screw melt extruder for the layer B, and a polypropylene resin C1 was supplied to a single-screw melt extruder for the layer C. Here, the oxygen concentration in the supply hopper of each extruder was controlled to 0.05%, and melt extrusion was performed at a temperature of 260°C in each extruder, and then foreign matter was removed from the extruded molten resin with a sintered filter with a cut of 80 um. Then, using a feed block, the molten resin was laminated at a temperature of 250°C to form a three layer structure of b/a/c (the compositions for the layer B, the layer A, and the layer C in a molten state are referred to as b, a, and c in order) with a lamination ratio of 1/10/1 (the cycloolefin-based resin contained in the layer A is 9.6% by mass, and the thickness ratio of the layer A to the entire film is approximately 83%, so the cycloolefin-based resin contained in the entire film is 8.0% by mass). At this time, the lamination ratio was adjusted by controlling the extrusion amount from each extruder. Further, the laminated molten resin was introduced into a T-die and discharged in a sheet form at a temperature of 240°C, and the discharged molten sheet was cooled and solidified on a casting drum maintained at 21°C to obtain an unstretched sheet. At this time, the molten sheet was brought into close contact with the casting drum by blowing air controlled to 40°C from an air knife so that b was brought into contact with the casting drum.

Next, the unstretched polyolefin-based film was preheated in a stepwise manner up to 145°C with a plurality of roll groups, subsequently passed through rolls maintained at 155°C and provided with a difference in circumferential speed, and stretched 5.2 times in the machine direction. Subsequently, the stretched film was cooled by passing the film between rolls maintained at 70°C, and then cooled to room temperature to obtain a uniaxially oriented film. Furthermore, the obtained uniaxially oriented film was guided to a tenter, preheated to 165°C with the opposite ends in the transverse direction being grasped with clips, stretched 9.2 times in the transverse direction at 158°C, and then heat-treated at 162°C while being relaxed by 12% in the transverse direction. Thereafter, with the opposite ends in the transverse direction remaining tensely gripped with the clips, the film was guided to the outside of the tenter through a cooling step at 140°C, and the clips at the opposite ends in the transverse direction were released. Next, the film surface (on the side of the layer B serving as the surface in contact with the casting drum) was subjected to a corona discharge treatment at a treatment intensity of 25 W·min/m$^2$ under a mixed gas atmosphere (environment in which oxygen concentration is measured to be at 0.8% by volume) in which a carbon dioxide gas and a nitrogen gas were mixed at a volume ratio of 15 : 85, and the obtained polyolefin-based film was then wound up as a roll. Subsequently, the polyolefin-based film was unwound from the roll, and Al was vapor-deposited on the surface subjected to the corona discharge treatment by the above-described method, thereby obtaining a laminated body having an Al-vapor-deposited layer (layer D). The properties of the obtained polyolefin-based film and laminated body are shown in Table 1.

(Example 2)

A polyolefin-based film and a laminated body were produced in the same way as in Example 1, except that AlOx was vapor-deposited instead of Al to make a laminated body with an AlOx layer (layer D). The properties of the obtained polyolefin-based film and laminated body having the layer D vapor-deposited thereon are shown in Table 1. The AlOx was vapor-deposited by the above-described method.

(Example 3)

The polyolefin-based film produced in Example 2 was pulverized and compressed with a crusher, charged into an extruder controlled to have a hopper oxygen concentration of 0.05% and set at a temperature of 240°C, and kneaded and extruded, and the strand was cooled with water and then made into chips to obtain regenerated pellets (AR1). Next, as the polyolefin-based resin raw materials for the layer A, A1, AM1, and AR1 were mixed in a mass ratio of 53 : 27 : 20 and supplied to the single-screw melt extruder for the layer A, the polypropylene resin B1 was supplied to the single-screw melt extruder for the layer B, and the polypropylene resin C1 was supplied to the single-screw melt extruder for the layer C. Here, a polyolefin-based film and a laminated body having the layer D vapor-deposited thereon were produced in the same manner as in Example 2, except that the oxygen concentration in the supply hopper of each extruder was controlled to 0.05%, and melt extrusion was performed at a temperature of 260°C in each extruder under the film formation conditions shown in Table 1 (the cycloolefin content in the entire film was 8.1% by mass because the cycloolefin content in the layer A was 9.7% by mass and the thickness ratio of the layer A to the entire film was 830). The properties of the obtained polyolefin-based film and laminated body having the layer D vapor-deposited thereon are shown in Table 1.

(Example 4)

A polyolefin-based film and a laminated body having the layer D vapor-deposited thereon were produced in the same manner as in Example 2, except that the layer structure was B/A/B, the polypropylene-based resin B2 was used for the layer B, and the film formation conditions were as shown in Table 1. The properties of the obtained polyolefin-based film and laminated body having the layer D vapor-deposited thereon are shown in Table 1. The vapor deposition was performed on the side of the layer B in contact with the cast drum.

(Example 5)

A polyolefin-based film and a laminated body having the layer D vapor-deposited thereon were produced in the same manner as in Example 2, except that the layer structure was B/A/B, and 63 parts by mass of the polyolefin-based resin material (AM2), 36.6 parts by mass of the polypropylene resin (A1), and 0.4 parts by mass of the antioxidant were mixed and supplied to the single-screw melt extruder for the layer A, and the lamination ratio and film formation conditions were as in Table 1. The properties of the obtained polyolefin-based film and laminated body having the layer D vapor-deposited thereon are shown in Table 1. The vapor deposition was performed on the side of the layer B in contact with the cast drum.

(Example 6)

A polyolefin-based film and a laminated body having the layer D vapor-deposited thereon were produced in the same manner as in Example 2, except that the layer structure was the layer A alone, and 66.7 parts by mass of the polyolefin-based resin material (AM1), 32.6 parts by mass of the polypropylene resin (A1), and 0.4 parts by mass of the antioxidant were mixed and supplied to the single-screw melt extruder for the layer A, and the film formation conditions were as in Table 1. The properties of the obtained polyolefin-based film and laminated body having the layer D vapor-deposited thereon are shown in Table 1. The vapor deposition was performed on the surface in contact with the cast drum.

(Example 7)

A polyolefin-based film and a laminated body having the layer D vapor-deposited thereon were produced in the same manner as in Example 2, except that the layer B of Example 2 was formed by mixing 95.6 parts by mass of the polypropylene resin (B1), 4 parts by mass of the polyolefin-based resin material (BM1), and 0.4 parts by mass of the antioxidant and supplying the mixture to the single-screw melt extruder for the layer B, and the layer A was formed by mixing 28.6 parts by mass of the polyolefin-based resin material (AM1), 67.6 parts by mass of the polypropylene resin (A1), and 0.4 parts by mass of the antioxidant and supplying the mixture to the single-screw melt extruder for the layer A (the cycloolefin-based resin contained in the layer A is 8.6% by mass, and since the thickness ratio of the layer A to the entire film is approximately 83%, the cycloolefin-based resin contained in the entire film is 7.1% by mass), and the film formation conditions were as in Table 1. The properties of the obtained polyolefin-based film and laminated body having the layer D vapor-deposited thereon are shown in Table 1. The vapor deposition was performed on the surface in contact with the cast drum.

(Example 8)

A polyolefin-based film and a laminated body having the layer D vapor-deposited thereon were produced in the same manner as in Example 2, except that the layer B of Example 2 was formed by mixing 87.6 parts by mass of the polypropylene resin (B1), 12 parts by mass of the polyolefin-based resin material (BM1), and 0.4 parts by mass of the antioxidant and supplying the mixture to the single-screw melt extruder for the layer B, and the layer A was formed by mixing 28.6 parts by mass of the polyolefin-based resin material (AM1), 67.6 parts by mass of the polypropylene resin (A1), and 0.4 parts by mass of the antioxidant and supplying the mixture to the single-screw melt extruder for the layer A, and the film formation conditions were as in Table 1. The properties of the obtained polyolefin-based film and laminated body having the layer D vapor-deposited thereon are shown in Table 1. The vapor deposition was performed on the surface in contact with the cast drum.

(Example 9)

A polyolefin-based film and a laminated body having the layer D vapor-deposited thereon were produced in the same manner as in Example 8, except that the polyolefin-based resin material (AM3) was used as the layer A of Example 8, and the film formation conditions were as shown in Table 1. The properties of the obtained polyolefin-based film and laminated body having the layer D vapor-deposited thereon are shown in Table 1. The vapor deposition was performed on the surface in contact with the cast drum.

(Example 10)

A polyolefin-based film was produced in the same manner as in Example 4, except that the film thickness was 3.1 um, and the layer A was formed by mixing 28.6 parts by mass of the polyolefin-based resin material (AM1), 67.6 parts by mass of the polypropylene resin (A1), and 0.4 parts by mass of the antioxidant and supplying the mixture to the single-screw melt extruder for the layer A, and the film formation conditions were as in Table 1. The capacitor properties of the resulting film are shown in Table 1.

(Example 11)

A polyolefin-based film was produced in the same manner as in Example 10, except that the polyolefin-based resin material (AM3) was used as the layer A of Example 10, and the film formation conditions were as shown in Table 1. The capacitor properties of the resulting film are shown in Table 1.

(Comparative Example 1)

A polyolefin-based film and a laminated body having the layer D vapor-deposited thereon were produced in the same manner as in Example 2 except that only the polypropylene-based resin A1 was used for the layer A without using a masterbatch and the film formation conditions were as shown in Table 2. The properties of the obtained polyolefin-based film and laminated body having the layer D vapor-deposited thereon are shown in Table 2.

(Comparative Example 2)

A polyolefin-based film and a laminated body having the layer D vapor-deposited thereon were produced in the same manner as in Example 2, except that the layer structure was B/A/B, no masterbatch was used for the layer A, and 90 parts by mass of the polypropylene-based resin A1, 9.6 parts by mass of the cycloolefin-based resin, and 0.4 parts by mass of the antioxidant were mixed and supplied to the single-screw melt extruder for the layer A, the polypropylene-based resin B2 was used for the layer B, and the film formation conditions were as shown in Table 2. The properties of the obtained polyolefin-based film and laminated body having the layer D vapor-deposited thereon are shown in Table 2. The vapor deposition was performed on the side of the layer B in contact with the cast drum.

(Comparative Example 3)

A polyolefin-based film and a laminated body having the layer D vapor-deposited thereon were produced in the same manner as in Example 2 except that the film formation conditions and the lamination ratio were as shown in Table 2. The properties of the obtained polyolefin-based film and laminated body having the layer D vapor-deposited thereon are shown in Table 2.

(Comparative Example 4)

A polyolefin-based film and a laminated body having the layer D vapor-deposited thereon were produced in the same manner as in Example 4, except that the oxygen concentration in the raw material supply hopper was 10%, the temperature condition during extrusion was set to be constant at 260°C without multistage temperature decrease in which the temperature was lowered stepwise in the section from the extruder to the T die, and the film formation conditions were as shown in Table 2. The properties of the obtained polyolefin-based film and laminated body having the layer D vapor-deposited thereon are shown in Table 2. The vapor deposition was performed on the side of the layer B in contact with the cast drum.

(Comparative Example 5)

A polyolefin-based film and a laminated body having the layer D vapor-deposited thereon were produced in the same manner as in Example 4, except that the laminated structure was B/A/B, a laminate thickness ratio is 1/8/1, and 63 parts by mass of the polyolefin-based resin material (AM2), 36.6 parts by mass of the polypropylene resin (A1), and 0.4 parts by mass of the antioxidant were mixed and supplied to the single-screw melt extruder for the layer A to form the layer A, and the film formation conditions without biaxial stretching were as shown in Table 2. The properties of the obtained polyolefin-based film and laminated body having the layer D vapor-deposited thereon are shown in Table 2. The vapor deposition was performed on the side of the layer B in contact with the cast drum.

(Comparative Example 6)

A polyolefin-based film was produced in the same manner as in Example 4 except that the film thickness was 3.1 um and the film formation conditions were as shown in Table 2. The produced polyolefin-based film and the properties of the film capacitor are shown in Table 2.

(Comparative Example 7)

A polyolefin-based film was produced in the same manner as in Comparative Example 2 except that the film thickness was 3.1 um and the film formation conditions were as shown in Table 2. The capacitor properties of the produced film are shown in Table 2.

[Table 1-1]

| | | | | Example 1 | Example 2 | Example 3 | Example 4 | Example 5 | Example 6 |
|---|---|---|---|---|---|---|---|---|---|
| | Layer structure | | - | B/A/C | B/A/C | B/A/C | B/A/B | B/A/B | Layer A alone |
| | Lamination ratio | | - | 1/10/1 | 1/10/1 | 1/10/1 | 1/10/1 | 1/11/1 | - |
| Layer B | Polypropylene-based resin | Type | - | B1 | B1 | B1 | B2 | B1 | - |
| | | Melting point | (°C) | 162 | 162 | 162 | 165 | 162 | - |
| | Resin that is incomplete with polypropylene-based resin | Type | - | - | - | - | - | - | - |
| | | Addition amount | (% by mass) | - | - | - | - | - | - |
| | Types of masterbatch | | - | AM1 | AM1 | AM1 | AM1 | AM2 | AM1 |
| | Whether raw material compounding is performed | | - | Performed | Performed | Performed | Performed | Performed | Performed |
| Layer A | Polypropylene-based resin | Type | (-) | A1 | A1 | A1 | A1 | A2 | A1 |
| | | Melting point | (°C) | 165 | 165 | 165 | 165 | 162 | 165 |
| | Types of particle | | (-) | - | - | Alumina | - | - | - |
| Layer C | Polypropylene-based resin | Type | - | C1 | C1 | C1 | - | - | - |
| | | Melting point | (°C) | 135 | 135 | 135 | - | - | - |
| | Content of cycloolefin-based resin in entire film | | (% by mass) | 8.0 | 8.0 | 8.1 | 8.0 | 16.0 | 20.0 |
| Film formation condition | Casting drum temperature | | (°C) | 21 | 21 | 23 | 21 | 22 | 90 |
| | Longitudinal stretch ratio | | (times) | 5.2 | 5.2 | 5.0 | 5.3 | 9.8 | 4.2 |
| | Transverse stretch ratio | | (times) | 9.2 | 9.2 | 8.5 | 9.1 | 8.1 | 8.8 |
| | Area magnification | | (times) | 48 | 48 | 43 | 48 | 39 | 37 |
| | Preheating temperature before transverse stretching / transverse stretching temperature | | (°C) | 165/158 | 165/158 | 166/159 | 165/158 | 166/153 | 166/159 |
| | Heat treatment temperature | | (°C) | 162 | 162 | 162 | 161 | 153 | 161 |
| | Film thickness | | (pm) | 12 | 12 | 14 | 12 | 13 | 12 |
| | E'121/E'50 | | (-) | 0.38 | 0.38 | 0.36 | 0.35 | 0.29 | 0.26 |
| | Tensile elongation in direction orthogonal to main orientation axis | | (%) | 36 | 36 | 41 | 35 | 95 | 25 |

(continued)

| | | | Example 1 | Example 2 | Example 3 | Example 4 | Example 5 | Example 6 |
|---|---|---|---|---|---|---|---|---|
| Film properties | Thermal shrinkage rate in main orientation axis direction at 150°C | (%) | 4 | 4 | 3 | 4 | 8 | 5 |
| | Number of domains of cycloolefin resin in rectangle measuring 1 pm × 2 μm in layer A | (number/2 μm²) | 7 | 7 | 7 | 7 | 9 | 11 |
| | tan550/tan5121 | (-) | 0.91 | 0.91 | 0.38 | 0.36 | 0.30 | 0.27 |
| | Glossiness | (%) | 145 | 145 | 141 | 144 | 135 | 127 |
| | Ten point region height (S10z) of surface | (nm) | 172 | 172 | 178 | 170 | 165 | 455 |
| | Heat sealability | (-) | A | A | A | B | B | B |
| | Thickness of layer D | (nm) | 100 | 20 | 20 | 20 | 20 | 20 |
| | Protrusion mountain average height Spk of surface of layer D | (nm) | 45 | 45 | 56 | 48 | 125 | 195 |
| Laminated body properties | Al vapor deposition Water vapor barrier properties | (-) | A | - | - | - | - | - |
| | Al vapor deposition Oxygen barrier properties | (-) | A | - | - | - | - | - |
| | AlOx vapor deposition Water vapor barrier properties | (-) | - | A | A | A | B | C |
| | AlOx vapor deposition Oxygen barrier properties | (-) | - | A | A | A | B | C |
| Capacitor properties | Withstand voltage | (-) | - | - | - | - | - | - |
| | Reliability | (-) | - | - | - | - | - | - |

[Table 1-2]

| | | | Example 7 | Example 8 | Example 9 | Example 10 | Example 11 |
|---|---|---|---|---|---|---|---|
| Layer structure | Lamination ratio | - | B/A/C | B/A/C | B/A/C | B/A/B | B/A/B |
| | | | 1/10/1 | 1/10/1 | 1/10/1 | 1/10/1 | 1/10/1 |
| Layer B | Polypropylene-based resin | Type | B1 | B1 | B1 | B2 | B2 |
| | | Melting point (°C) | 162 | 162 | 162 | 165 | 165 |
| | Resin that is incompatible with polypropylene-based resin | Type | PMP | PMP | PMP | - | - |
| | | Addition amount (% by mass) | 1.2 | 3.6 | 3.6 | - | - |
| | Types of masterbatch | - | AM1 | AM1 | AM3 | AM1 | AM3 |
| | Whether raw material compounding is performed | - | Performed | Performed | Performed | Performed | Performed |
| Layer A | Polypropylene-based resin | Type (-) | A1 | A1 | A1 | A1 | A1 |
| | | Melting point (°C) | 165 | 165 | 165 | 165 | 165 |
| | Types of particle | (-) | - | - | - | - | - |
| Layer C | Polypropylene-based resin | Type | C1 | C1 | C1 | - | - |
| | | Melting point (°C) | 135 | 135 | 135 | - | - |
| Content of cycloolefin-based resin in entire film | | (% by mass) | 7.1 | 7.1 | 7.1 | - | - |
| Film formation condition | Casting drum temperature | (°C) | 23 | 23 | 24 | 23 | 24 |
| | Longitudinal stretch ratio | (times) | 5.1 | 5.2 | 5.2 | 5.4 | 5.4 |
| | Transverse stretch ratio | (times) | 9.2 | 9.2 | 9.2 | 9.9 | 9.9 |
| | Area magnification | (times) | 97 | 98 | 98 | 51 | 51 |
| | Preheating temperature before transverse stretching / transverse stretching temperature | (°C) | 165/157 | 165/158 | 165/158 | 165/158 | 165/158 |
| | Heat treatment temperature | (°C) | 161 | 162 | 162 | 162 | 162 |
| | Film thickness | (µm) | 12 | 12 | 12 | 3.1 | 3.1 |
| | E'121/E'50 | (-) | 0.37 | 0.37 | 0.37 | 0.38 | 0.38 |
| | Tensile elongation in direction orthogonal to main orientation axis | (%) | 35 | 34 | 33 | 33 | 32 |
| Film properties | Thermal shrinkage rate in main orientation axis direction at 150°C | (%) | 4 | 4 | 4 | 4 | 4 |

|  |  |  | Example 7 | Example 8 | Example 9 | Example 10 | Example 11 |
|---|---|---|---|---|---|---|---|
|  | Number of domains of cycloolefin resin in rectangle measuring 1 pm × 2 pm in layer A | (number/2 $\mu m^2$) | 7 | 7 | 7 | 8 | 8 |
|  | tan$\delta$50/tan$\delta$121 | (-) | 0.90 | 0.90 | 0.90 | 0.91 | 0.91 |
|  | Glossiness | (%) | 144 | 142 | 141 | 142 | 142 |
|  | Ten point region height (S10z) of surface | (nm) | 189 | 292 | 239 | 155 | 150 |
|  | Heat sealability | (-) | A | A | A | - | - |
| Laminated body properties | Thickness of layer D | (nm) | 20 | 20 | 20 | - | - |
|  | Protrusion mountain average height Spk of surface of layer D | (nm) | 70 | 85 | 84 | - | - |
|  | Al vapor deposition Water vapor barrier properties | (-) | - | - | - | - | - |
|  | Al vapor deposition Oxygen barrier properties | (-) | - | - | - |  | - |
|  | AlOx vapor deposition Water vapor barrier properties | (-) | A | S | S | - | - |
|  | AlOx vapor deposition Oxygen barrier properties | (-) | S | S | S | - | - |
| Capacitor properties | Withstand voltage | (-) | - | - | - | A | A |
|  | Reliability | (-) | - | - | - | A | A |

[Table 2-1]

| | | | | Comparative Example 1 | Comparative Example 2 | Comparative Example 3 | Comparative Example 4 |
|---|---|---|---|---|---|---|---|
| Layer structure | | | | B/A/C | B/A/B | B/A/C | B/A/B |
| Lamination ratio | | | | 1/10/1 | 1/10/1 | 1/12/1 | 1/10/1 |
| Layer B | Polypropylene-based resin | Type | - | B1 | B2 | B1 | B2 |
| | | Melting point | (°C) | 162 | 165 | 162 | 165 |
| | Resin that is incompatible with polypropylene-based resin | Type | - | - | - | - | - |
| | | Addition amount | (% by mass) | - | - | - | - |
| Layer A | Types of masterbatch | | - | - | - | AM1 | AM1 |
| | Whether raw material compounding is performed | | - | - | Not performed | Performed | Performed |
| | Polypropylene-based resin | Type | (-) | A1 | A1 | A1 | A1 |
| | | Melting point | (°C) | 165 | 165 | 165 | 165 |
| | Types of particle | | (-) | - | - | - | - |
| Layer C | Polypropylene-based resin | Type | - | C1 | - | C1 | - |
| | | Melting point | (°C) | 135 | - | 135 | - |
| Content of cycloolefin-based resin in entire film | | | (% by mass) | 0 | 8.0 | 8.2 | 8.0 |
| Film forma-tion condi-tion | Casting drum temperature | | (°C) | 21 | 24 | 21 | 23 |
| | Longitudinal stretch ratio | | (times) | 5.2 | 4.2 | 3.0 | 5.2 |
| | Transverse stretch ratio | | (times) | 10.1 | 8.4 | 8.5 | 9.2 |
| | Area magnification | | (times) | 53 | 35 | 26 | 48 |
| | Preheating temperature before transverse stretching / transverse stretching temperature | | (°C) | 165/158 | 165/158 | 165/158 | 160 |
| | Heat treatment temperature | | (°C) | 162 | 162 | 162 | 140 |
| | Film thickness | | (μm) | 12 | 12 | 14 | 12 |
| | E '121/E '50 | | (-) | 0.18 | 0.21 | 0.19 | 0.16 |
| | Tensile elongation in direction orthogonal to main orientation axis | | (%) | 32 | 35 | 46 | 36 |

(continued)

| | | | Comparative Example 1 | Comparative Example 2 | Comparative Example 3 | Comparative Example 4 |
|---|---|---|---|---|---|---|
| Film properties | Thermal shrinkage rate in main orientation axis direction at 150°C | (%) | 12 | 8 | 5 | 18 |
| | Number of domains of cycloolefin resin in rectangle measuring 1 $\mu$m × 2 $\mu$m in layer A | (number/2 $\mu$m$^2$) | 0 | 0 | 1 | 2 |
| | tan$\delta$50/tan$\delta$121 | (-) | 0.20 | 0.22 | 0.21 | 0.18 |
| | Glossiness | (%) | 145 | 128 | 115 | 138 |
| | Ten point region height (S10z) of surface | (nm) | 176 | 355 | 421 | 183 |
| | Heat sealability | (-) | A | B | A | B |
| Laminated body properties | Thickness of layer D | (nm) | 20 | 20 | 20 | 20 |
| | Protrusion mountain average height Spk of surface of layer D | (nm) | 51 | 181 | 235 | 111 |
| | Al vapor deposition Water vapor barrier properties | (-) | - | - | - | - |
| | Al vapor deposition Oxygen barrier properties | (-) | - | - | - | - |
| | AlOx vapor deposition Water vapor barrier properties | (-) | D | D | D | D |
| | AlOx vapor deposition Oxygen barrier properties | (-) | D | D | D | D |
| Capacitor properties | Withstand voltage | (-) | - | - | - | - |
| | Reliability | (-) | - | - | - | - |

[Table 2-2]

| | | | | Comparative Example 5 | Comparative Example 6 | Comparative Example 7 |
|---|---|---|---|---|---|---|
| Layer structure | | | | B/A/B | B/A/B | B/A/B |
| Lamination ratio | | | | 1/8/1 | 1/10/1 | 1/10/1 |
| Layer B | Polypropylene-based resin | Type | - | B2 | B2 | B2 |
| | | Melting point | (°C) | 165 | 165 | 165 |
| | Resin that is incompatible with polypropylene-based resin | Type | - | - | - | - |
| | | Addition amount | (% by mass) | - | - | - |
| Layer A | Types of masterbatch | | - | AM1 | - | - |
| | Whether raw material compounding is performed | | - | Performed | - | Not performed |
| | Polypropylene-based resin | Type | (-) | A1 | A1 | A1 |
| | | Melting point | (°C) | 165 | 165 | 165 |
| | Types of particle | | (-) | - | - | - |
| Layer C | Polypropylene-based resin | Type | - | - | - | - |
| | | Melting point | (°C) | - | - | - |
| Content of cycloolefin-based resin in entire film | | | (% by mass) | 15.1 | 0 | 8.0 |
| Film formation condition | Casting drum temperature | | (°C) | 21 | 21 | 21 |
| | Longitudinal stretch ratio | | (times) | - | 5.3 | 4.3 |
| | Transverse stretch ratio | | (times) | - | 9.4 | 8.5 |
| | Area magnification | | (times) | - | 50 | 37 |
| | Preheating temperature before transverse stretching / transverse stretching temperature | | (°C) | - | 165/158 | 165/158 |
| | Heat treatment temperature | | (°C) | | 161 | 161 |
| Film properties | Film thickness | | (μm) | 100 | 3.1 | 3.1 |
| | E'121/E'50 | | (-) | 0.19 | 0.19 | 0.21 |
| | Tensile elongation in direction orthogonal to main orientation axis | | (%) | 10 | 36 | 36 |
| | Thermal shrinkage rate in main orientation axis direction at 150°C | | (%) | 0 | 11 | 7 |
| | Number of domains of cycloolefin resin in rectangle measuring 1 μm × 2 μm in layer A | | (number/2 μm$^2$) | 0 | 0 | 0 |
| | tanδ50/tanδ121 | | (-) | 0.23 | 0.21 | 0.22 |
| | Glossiness | | (%) | 80 | 145 | 143 |
| | Ten point region height (S10z) of surface | | (nm) | 556 | 166 | 172 |
| | Heat sealability | | (-) | B | - | - |

(continued)

| | | | Comparative Example 5 | Comparative Example 6 | Comparative Example 7 |
|---|---|---|---|---|---|
| Laminated body prop-erties | Thickness of layer D | (nm) | 20 | - | - |
| | Protrusion mountain average height Spk of surface of layer D | (nm) | 421 | - | - |
| | Al vapor deposition Water vapor barrier properties | (-) | - | - | - |
| | Al vapor deposition Oxygen barrier properties | (-) | - | - | - |
| | AlOx vapor deposition Water vapor barrier properties | (-) | D | - | - |
| | AlOx vapor deposition Oxygen barrier properties | (-) | D | - | - |
| Capacitor properties | Withstand voltage | (-) | - | B | B |
| | Reliability | (-) | - | B | B |

INDUSTRIAL APPLICABILITY

According to the present invention, a polyolefin-based film capable of reducing deterioration in structural stability, water vapor barrier properties, and oxygen barrier properties due to heating can be provided. The polyolefin-based film of the present invention has the above properties, and therefore can be suitably used for packing of articles which are likely to be deteriorated by water vapor or oxygen.

DESCRIPTION OF REFERENCE SIGNS

1: Part of section X
2: Sea portion
3: Island portion (domain)
4: Rectangle of size of 1 um × 2 um defined in section X such that pair of sides are parallel to thickness direction
5: Pair of sides parallel to thickness direction

**Claims**

1.  A polyolefin-based film comprising at least one layer, which is layer A, containing a cycloolefin-based resin and a polypropylene-based resin, wherein when a storage modulus in a main orientation axis direction at 50°C and 121°C, obtained at a frequency of 10 Hz in a dynamic viscoelasticity measurement, is E'50 (Pa) and E'121 (Pa), respectively, E'121/E'50 is more than 0.25 and 0.99 or less, a thermal shrinkage rate in the main orientation axis direction is -2% or more and 10% or less at 150°C, and a tensile elongation in a direction orthogonal to a main orientation axis is 20% or more and 300% or less.

2.  A polyolefin-based film comprising at least one layer, which is layer A, containing a cycloolefin-based resin and a polypropylene-based resin, wherein, assuming a section obtained by cutting the layer A along a plane parallel to a main orientation axis direction and a thickness direction is a section X, in a rectangle measuring 1 um × 2 um defined in the section X such that a pair of short sides are parallel to the thickness direction, there are two or more domains of the cycloolefin-based resin passing through the pair of short sides, and E'121/E'50 is greater than 0.20 and is 0.99 or less when a storage modulus in the main orientation axis direction at 50°C and 121°C, obtained at a frequency of 10 Hz in a dynamic viscoelasticity measurement, is E'50 (Pa) and E'121 (Pa), respectively.

3.  The polyolefin-based film according to claim 1 or 2, wherein when tanδ in the main orientation axis direction at 50°C and 121°C, obtained at a frequency of 10 Hz in a dynamic viscoelasticity measurement, is defined as tanδ50 and

tan$\delta$121, respectively, tan$\delta$50/tan$\delta$121 is more than 0.25 and 0.99 or less.

4. The polyolefin-based film according to any one of claims 1 to 3, wherein when a layer containing a polypropylene-based resin as a main component and containing a lower content of a cycloolefin-based resin than the layer A is defined as a layer B, at least one surface of the layer A has the layer B.

5. The polyolefin-based film according to claim 4, wherein when a layer having a melting point lower than melting points of the layer A and the layer B and having a melting point of 100°C or more and 150°C or less is defined as a layer C, the layer B is positioned on one outermost surface and the layer C is positioned on another outermost surface.

6. The polyolefin-based film according to claim 4 or 5, wherein a ten point region height (S10z) of at least one of surfaces of the layer B measured by three dimensional non-contact surface profile measurement is 150 nm or more and 900 nm or less.

7. The polyolefin-based film according to any one of claims 4 to 6, wherein the layer B contains 1% by mass or more and 10% by mass or less of a thermoplastic resin which is incompatible with the polypropylene-based resin.

8. The polyolefin-based film according to any one of claims 1 to 7, further comprising at least one of metal particles and inorganic compound particles.

9. The polyolefin-based film according to claim 8, wherein the inorganic compound particles contain at least one of alumina, silica, and oxides of aluminum and silicon.

10. The polyolefin-based film according to any one of claims 1 to 9, wherein a main component is the polypropylene-based resin.

11. The polyolefin-based film according to any one of claims 1 to 10, wherein at least one film surface glossiness is more than 130% and 160% or less.

12. The polyolefin-based film according to any one of claims 1 to 11, being a biaxially oriented film.

13. A laminated body comprising: the polyolefin-based film according to any one of claims 1 to 12; and a layer, which is layer D, containing a metal and an inorganic compound in a total amount of more than 50% by mass and 100% by mass or less.

14. The laminated body according to claim 13, wherein a protrusion mountain average height (Spk) of a surface of the layer D measured with a three dimensional non-contact surface-roughness tester is 10 nm or more and 400 nm or less.

15. A packing material comprising at least one of the polyolefin-based film according to any one of claims 1 to 12 and the laminated body according to claim 13 or 14.

16. A packed body wherein a content is packed using the packing material according to claim 15.

17. A metallized film comprising a metal membrane on at least one surface of the polyolefin-based film according to any one of claims 1 to 4, 6, 7, and 10 to 12.

18. A film capacitor comprising the metallized film according to claim 17.

19. A power control unit comprising the film capacitor according to claim 18.

20. An electric vehicle comprising the power control unit according to claim 19.

21. An electric aircraft comprising the power control unit according to claim 19.

【FIG.1】

【Fig.2】

| INTERNATIONAL SEARCH REPORT | International application No. |
|---|---|
| | **PCT/JP2022/046643** |

**A.    CLASSIFICATION OF SUBJECT MATTER**

*B32B 27/32*(2006.01)i; *B65D 65/40*(2006.01)i; *C08J 5/18*(2006.01)i
FI:    B32B27/32; B65D65/40 D; C08J5/18 CES

According to International Patent Classification (IPC) or to both national classification and IPC

**B.    FIELDS SEARCHED**

Minimum documentation searched (classification system followed by classification symbols)

B32B27/32; B65D65/40; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2017-154504 A (TORAY INDUSTRIES, INC.) 07 September 2017 (2017-09-07) claims, examples | 1-21 |
| A | WO 2013/002065 A1 (TORAY INDUSTRIES, INC.) 03 January 2013 (2013-01-03) claims, examples | 1-21 |
| A | WO 2012/035956 A1 (TORAY INDUSTRIES, INC.) 22 March 2012 (2012-03-22) claims, examples | 1-21 |
| A | JP 2018-34510 A (TORAY INDUSTRIES, INC.) 08 March 2018 (2018-03-08) claims, examples | 1-21 |
| A | JP 2015-164800 A (JAPAN POLYETHYLENE CORP.) 17 September 2015 (2015-09-17) claims, examples | 1-21 |
| A | JP 2006-110827 A (TOYO BOSEKI KABUSHIKI KAISHA) 27 April 2006 (2006-04-27) claims, examples | 1-21 |
| A | JP 2011-148226 A (C I KASEI CO., LTD.) 04 August 2011 (2011-08-04) claims, examples | 1-21 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **17 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| | INTERNATIONAL SEARCH REPORT<br>Information on patent family members | International application No.<br>**PCT/JP2022/046643** |
|---|---|---|

| Patent document<br>cited in search report | | | Publication date<br>(day/month/year) | Patent family member(s) | | | Publication date<br>(day/month/year) |
|---|---|---|---|---|---|---|---|
| JP | 2017-154504 | A | 07 September 2017 | WO | 2014/061403 | A1 | |
| | | | | TW | 201422428 | A | |
| | | | | CN | 104661813 | A | |
| | | | | KR | 10-2015-0073947 | A | |
| WO | 2013/002065 | A1 | 03 January 2013 | US | 2014/0127502 | A1 | |
| | | | | claims, examples | | | |
| | | | | EP | 2727723 | A1 | |
| | | | | CN | 103608176 | A | |
| | | | | KR | 10-2014-0031919 | A | |
| | | | | TW | 201304956 | A | |
| WO | 2012/035956 | A1 | 22 March 2012 | US | 2014/0147666 | A1 | |
| | | | | claims, examples | | | |
| | | | | EP | 2617758 | A1 | |
| | | | | CN | 103068891 | A | |
| | | | | KR | 10-2013-0106366 | A | |
| | | | | TW | 201217454 | A | |
| JP | 2018-34510 | A | 08 March 2018 | (Family: none) | | | |
| JP | 2015-164800 | A | 17 September 2015 | (Family: none) | | | |
| JP | 2006-110827 | A | 27 April 2006 | (Family: none) | | | |
| JP | 2011-148226 | A | 04 August 2011 | (Family: none) | | | |

Form PCT/ISA/210 (patent family annex) (January 2015)

EP 4 501 633 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020521867 W
- JP 2018034510 A
- JP H09272188 A
- JP 2005535481 W

**Non-patent literature cited in the description**

- **SATORU IWAMORI**. *Kobunshi Hyomen Kakogaku"* *(Polymer Surface Processing)*, 118-119